# EUROPEAN PATENT APPLICATION

(11) **EP 2 194 482 A1**
(43) Date of publication of application: **09.06.2010**
(21) Application number: 09014702.6
(22) Date of filing: 25.11.2009
(51) Int. Cl.: G06F 21/20

(54) **Authentication intermediary server and programs therefor**

(30) Priority: 26.11.2008 JP 2008301659
(71) Applicant: Hitachi CO., LTD., 6-6 Marunouchi 1-chome Chiyoda-ku Tokyo 100-8280 (JP)
(72) Inventor: Yamamoto, Dan, Tokyo 100-8220 (JP); Kaji, Tadashi, Tokyo 100-8220 (JP); Fujishiro, Takahiro, Tokyo 100-8220 (JP); Irube, Shinichi, Tokyo 100-8220 (JP)
(74) Representative: Strehl Schübel-Hopf & Partner

(57) **Abstract**

An authentication server is dynamically changed in consideration of a user's situation, a kind of service used by the user and user's convenience. When a terminal device 1 is going to receive provision of service from a service providing server 2, an authentication intermediary server 4 selects an authentication server 3 among authentication servers 3 that satisfy selection conditions previously set by the user of the terminal device 1 such as presence information, priority, usage condition, service providing server conditions and the like, so that the user of the terminal device 1 undergo authentication by the selected authentication server 3.

## Description

### INCORPORATION BY REFERENCE

This application claims priority based on a Japanese patent application, No. 2008-301659 filed on November 26, 2008, the entire contents of which are incorporated herein by reference.

### BACKGROUND

The present invention relates to a technique of selecting an authentication server to which a terminal device makes a request for authentication of its user when the terminal device is going to receive provision of service from a service providing server.

With the spread of the Internet, users can enjoy a variety of services such as deliveries of moving image or sound and publication of Web applications or Web sites over networks. When a user wishes to receive such services, some service providers authenticate the user.

If service providers implement their own user authentication schemes respectively, a user is required to satisfy authentication according to the authentication scheme selected arbitrarily by each service provider, and this reduces the user's convenience. Further, previous to utilization of each service, a user must register his attribute information with each service provider or the like. This may increase the possibility of leakage of the attribute information and lead to invasion of user's privacy.

As a technique of solving such problems, a technique called single sign-on that allows enjoyment of a plurality of services in one authentication operation is known. For example, according to Security Assertion Markup Language (SAML) described in "OASIS, Assertions and Protocols for the OASIS Security Assertion Markup Language (SAML) V2.0", [retrieved on August 20, 2008], the Internet <URL:http://docs.oasis-open.org/security/saml/v2.0/saml-core-2.0-os.pdf> (hereinafter, referred to as Document 1) and "OASIS, Profiles for the OASIS Security Assertion Markup Language (SAML) V2.0", [retrieved on August 20, 2008], the Internet, <URL:http://docs.oasis-open.org/security/saml/v2.0/saml-profiles-2.0-os.p df> (hereinafter, referred to as Document 2), and OpenID Authentication described in "OpenID Authentication 2.0-Final", [retrieved on August 20, 2008], the Internet <URL: http://opened.net/specs/opened-authentication-2_0.html> (hereinafter, referred to as Document 3), a service provider (referred to as a Service Provider in Documents 1 and 2 and a Relying Party in Document 3) entrusts user authentication to an authentication server (referred to an Identity Provider in Documents 1 and 2 and an OpenID provider in Document 3), in order to avoid necessity of user's authentication operation for each utilization of a service and retention of users' attribute information by each service provider.

### SUMMARY

As for the above-mentioned conventional techniques, there are the following problems when a user utilizes a plurality of authentication schemes.

According to SAML described in Documents 1 and 2, basically a service provider entrusts authentication only to an authentication server with which confidential relationship has been established. In the case where there are a plurality of authentication servers with which confidential relationships have been established, it is possible to select dynamically an authentication server that has already authenticated the user, by using a means described as Identity Provider Discovery Profile. However, it is impossible to reflect the user's situation (such as presence information) and policy.

According to OpenID Authentication described in Document 3, it is possible to designate an authentication server to use for authentication for a user by presenting a URL called an OpenID to a service providing server. However, if an authentication server should be selected case by case among a plurality of authentication servers, it is necessary to prepare an OpenID for every authentication server to use, and this reduces the user's convenience.

The present invention provides a technique that can dynamically change authentication servers in consideration of user's situation, kinds of services used by a user, and user's convenience.

To solve the above problems, according to the disclosed system, an authentication server that satisfies usage conditions previously set by a user is selected.

For example, the disclosed system provides an authentication intermediary server that selects an authentication server for authenticating a user of a terminal device when the terminal device is going to receive service from a service providing server, wherein: the authentication intermediary server comprises a control part and a storage part that stores service providing server request information that specifies a service providing server ID and specifies a requested condition requested in authentication by the service providing server ID; and the control part performs: processing, in which, when an information acquisition request specifying a service providing server ID is received from the service providing server, a requested condition corresponding to the service providing server ID specified by the information acquisition request is acquired from the service providing server request information, and the authentication server satisfying the acquired requested condition is selected; and processing, in which information specifying the selected authentication server is notified to the service providing server.

According to the teaching herein, it is possible to change an authentication server dynamically in consideration of a user's situation, a kind of service used by the user, and user's convenience.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 is a diagram showing an example of a schematic configuration of an authentication system;
Fig. 2 is a diagram showing an example of a functional configuration of a terminal device;
Fig. 3 is a diagram showing an example of schematic structure of a session information table;
Fig. 4 is a diagram showing an example of a schematic configuration of computer hardware;
Fig. 5 is a diagram showing an example of a functional configuration of a service providing server;
Fig. 6 is a diagram showing an example of schematic structure of a session information table;
Fig. 7 is a diagram showing an example of a functional configuration of an authentication server;
Fig. 8 is a diagram showing an example of schematic structure of a session information table;
Fig. 9 is a diagram showing an example of schematic structure of a user attribute information table;
Fig. 10 is a diagram showing an example of a functional configuration of an authentication intermediary server;
Fig. 11 is a diagram showing an example of schematic structure of a user policy information table;
Fig. 12 is a diagram showing an example of schematic structure of an authentication server information table;
Fig. 13 is a diagram showing an example of schematic structure of a service providing server request information table;
Fig. 14 is a diagram showing an example of schematic structure of an authentication level information table;
Fig. 15 is a diagram showing an example of schematic structure of a provided authentication strength information table;
Fig. 16 is a diagram showing an example of schematic structure of an authentication level definition information table;
Fig. 17 is a diagram showing an example of schematic structure of an ID information table;
Fig. 18 is a diagram showing an example of schematic structure of an attribute information table;
Fig. 19 is a diagram showing an example of a functional configuration of a presence server;
Fig. 20 is a diagram showing an example of schematic structure of a presence information table;
Fig. 21 is a diagram showing an example of a processing sequence in authentication in an authentication system;
Fig. 22 is a diagram showing an example of a processing sequence in authentication in an authentication system;
Fig. 23 is a flowchart showing an example of processing in a service providing server;
Fig. 24 is a flowchart showing an example of processing in an authentication server;
Fig. 25 is a flowchart showing an example of processing in a terminal device; and
Fig. 26 is a flowchart showing an example of processing in an authentication intermediary server.

### DETAILED DESCRIPTION OF THE EMBODIMENTS

Although the following embodiments refers to pieces of information such as domain names, URLs, URIs, IP addresses, these pieces of information are fictitious ones for explanation and have no relation to actual ones.

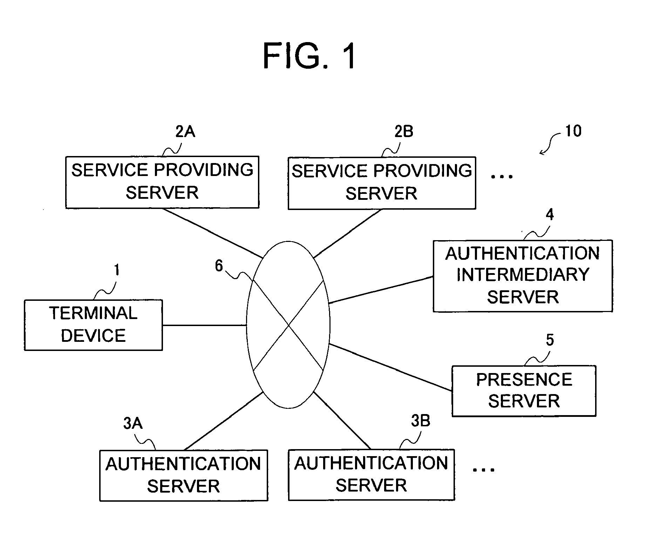

Fig. 1 is a schematic diagram showing an authentication system 10 as one embodiment of the present invention.

As shown in the figure, the authentication system 10 comprises a terminal device 1, a plurality of service providing servers 2A, 2B, ... (hereinafter, simply referred to as a service providing server 2 if it is not needed to distinguish each), a plurality of authentication servers 3A, 3B, ... (hereinafter, simply referred to as an authentication server 3 if it is not needed to distinguish each), an authentication intermediary server 4, and a presence server 5. These can send and receive information to and from one another via a network 6.

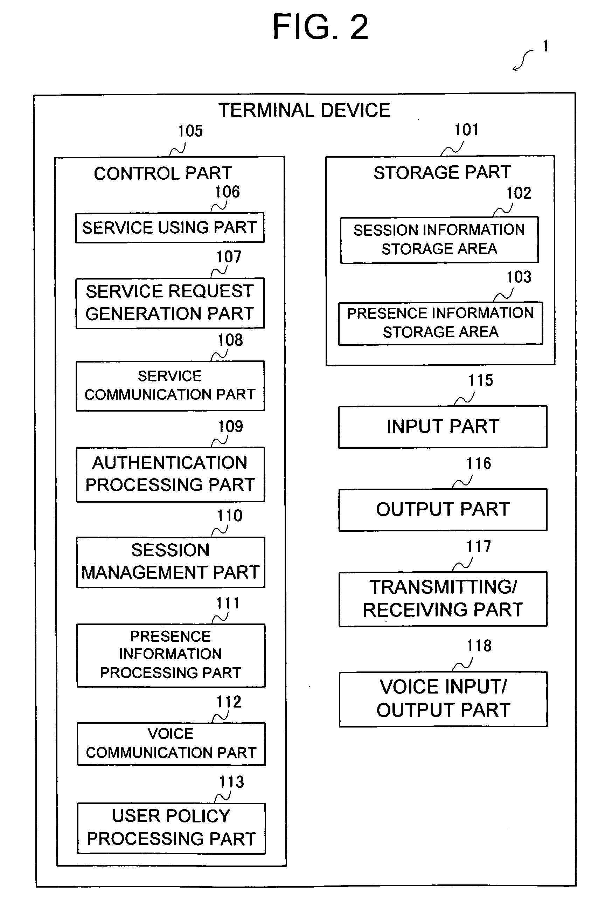

Fig. 2 is a schematic diagram showing an example of the terminal device 1. As shown in the figure, the terminal device 1 comprises a storage part 101, a control part 105, an input part 115, an output part 116, a transmitting/receiving part 117, and a voice input/output part 118.

The storage part 101 comprises a session information storage area 102 and a presence information storage area 103.

The session information storage area 102 stores session information that specifies a session established with another apparatus through the network 6. Here, in the present embodiment, a session means a sequence of data communications performed between apparatuses.

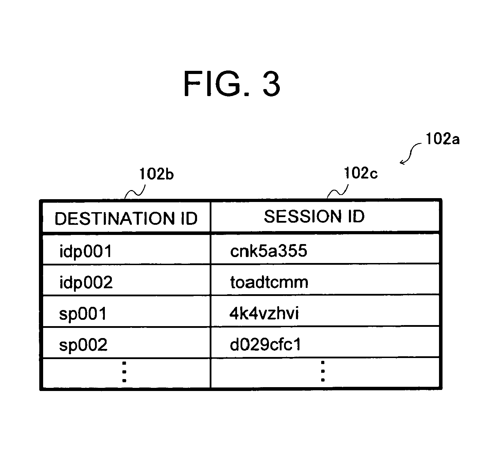

For example, in the present embodiment, the session information storage area 102 stores a session information table 102a as shown in Fig. 3 (a schematic diagram showing the session information table 102a).

The session information table 102a has a destination ID field 102b and a session ID field 102c.

The destination ID field 102b stores information specifying a destination apparatus. Here, as the information specifying a destination apparatus, a service providing server ID or an authentication server ID (which is identification information for uniquely identifying each apparatus, i.e. a service providing server 2 or an authentication server 3) is stored. For example, if a destination apparatus is a Web server, a URL such as "http://www.hitachi.com/" may be used as a value of the destination ID field.

The session ID field 102c stores information specifying a session with the apparatus specified in the destination ID field 102b. Here, as the information specifying a session, a session ID (which is identification information uniquely assigned to each session) is stored. For example, if a destination apparatus is a Web server, a character string that has been delivered as a Set-Cookie header value in an HTTP response from the Web server may be stored as a value of the session ID field.

Returning to Fig. 2, the presence information storage area 103 stores presence information of a user who uses the terminal device 1.

For example, in the present embodiment, as the presence information, information specifying whether the user is at "home" or at "office" (which can be previously inputted by the user through the input part 115) and information specifying whether the user using the terminal device 1 is "talking" through the below-described voice input/output part 118 (which can be judged by the below-described voice communication part 112) are stored, although this example is not intended to be limitation.

The control part 105 comprises a service using part 106, a service request generation part 107, a service communication part 108, an authentication processing part 109, a session management part 110, a presence information processing part 111, a voice communication part 112 and a user policy processing part 113.

The service using part 106 performs processing of providing an input/output interface for the user to use a service through the input part 115 and the output part 116, and receiving input of necessary information.

The service request generation part 107 performs processing of generating a message (a service request message) for requesting a service of a service providing server 2 through the input part 115 and the output part 116, on the basis of information whose input has been received by the service using part 106.

The service communication part 108 controls processing of transmitting and receiving information through the transmitting/receiving part 117 and the network 6. For example, it is possible to consider that the service communication part 108 is implemented by a protocol stack that enables HTTP communication for using Web sites and Web applications.

Further, the service communication part 108 performs transfer processing of a message sent or received between the authentication intermediary server 4 and a service providing server 2.

The authentication processing part 109 performs processing of calculating information required for an input or output request to the user and for authentication when the authentication is performed by an authentication server 3. For example, in the case where an authentication scheme performed by an authentication server 3 is the TLS client authentication, the authentication processing part 109 performs processing of: requesting the user to input a Personal Identification Number (PIN), through the output part 116 if necessary; acquiring the user's secret key stored in a portable storage medium such as a smart card or the storage part 101; combining information sent from the authentication server 3 to calculate information for proving the user's identity; and transmitting the calculated information to the authentication server 3 through the transmitting/receiving part 117.

The session management part 110 performs processing of managing a session established with another apparatus by the terminal device 1. For example, when the terminal device 1 establishes a session with a service providing server 2 or an authentication server 3, the session management part 110 generates a new record in the session information table 102a, stores the ID of the coupled apparatus and the session ID in the generated record, and at the end (i.e. disconnection) of the established session, deletes the record corresponding to the session.

The presence information processing part 111 performs processing of managing presence information of the user of the terminal device 1. For example, the presence information processing part 111 performs processing of receiving input of information specifying whether the user is at "home" or at "office" from the user of the terminal device 1 through the input/output part 115, and storing the inputted information specifying "home" or "office" in the presence information storage area 103 of the storage part 101.

Further, in the case where the below-described voice communication part 112 is performing voice communication, the presence information processing part 111 stores information specifying that the user of the terminal device 1 is performing voice communication (i.e. information specifying "talking"), in the presence information storage area 103 of the storage part 101.

Further, at a predetermined time, or when a request is received from the presence server 5, the presence information processing part 111 controls processing of transmitting the presence information stored in the presence information storage area 103 through the transmitting/receiving part 117 and the network 6.

The voice communication part 112 performs call control according to Session Initiation Protocol (SIP) or the like, and controls voice communication according to Real Time Protocol (RTP) or the like.

The user policy processing part 113 receives input of policy information from the user of the terminal device 1 through the input/output part 115. The policy information specifies a user ID, an authentication server ID of an authentication server 3 to use, the priority of the authentication server 3, use conditions of the authentication server 3 (conditions on the presence information) and information specifying a service providing server 2 that uses the authentication server 3 (i.e. a service providing server ID).

Then, the user policy processing part 113 performs processing of transmitting the inputted policy information to the authentication intermediary server 4 through the transmitting/receiving part 117 and the network 6.

The input part 115 receives input of information.

The output part 116 outputs information.

The transmitting/receiving part 117 performs transmission and reception of information through the network 6.

The voice input/output part 118 inputs and outputs voice.

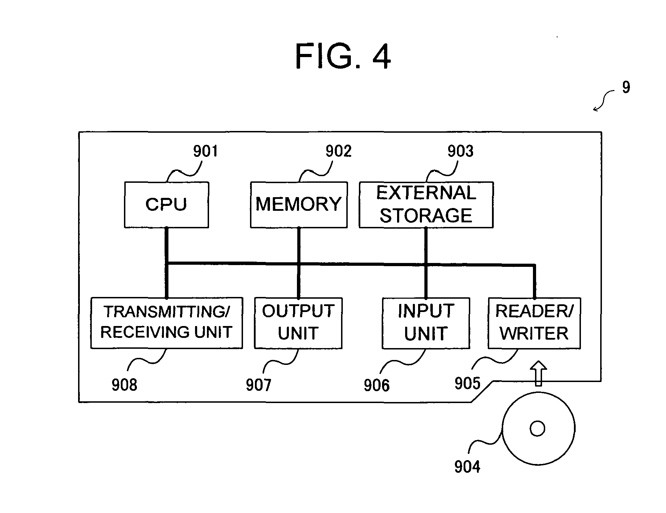

The above-described terminal device 1 can be implemented by an ordinary computer 9 as shown in Fig. 4 (a schematic diagram showing the computer 9), which comprises a Central Processing Unit (CPU) 901, a memory 902, an external storage 903 such as a Hard Disk Drive (HDD), a reader/writer 905 for reading and writing information to a portable storage medium 904 such as a Compact Disk (CD) or a Digital Versatile Disk (DVD), an input unit 906 such as a keyboard or a mouse, an output unit 907 such as a display, and a transmitting/receiving unit 908 such as a Network Interface Card (NIC) for coupling to a communication network, with a handset (not shown) equipped with a microphone and a speaker being coupled to the computer 9.

For example, the storage part 101 can be implemented when the CPU 901 uses the memory 902 or the external storage 903. The control part 105 can be implemented when a prescribed program stored in the external storage 903 is loaded into the memory 902 and executed by the CPU 901. The input part 115 can be implemented when the CPU 901 uses the input unit 906. The output part 116 can be implemented when the CPU 901 uses the output unit 907. The transmitting/receiving part 117 can be implemented when the CPU 901 uses the transmitting/receiving unit 908. And, the voice input/output part 118 can be implemented when the CPU 901 uses the handset (not shown).

The prescribed program may be downloaded from a storage medium 904 through the reader/writer 905 or from a network through the transmitting/receiving unit 908 to the external storage 903, and then loaded into the memory 902 and executed by the CPU 901. Or, the prescribed program may be directly loaded into the memory 902 from a storage medium 904 through the reader/writer 905 or from a network through the transmitting/receiving unit 908, and executed by the CPU 901.

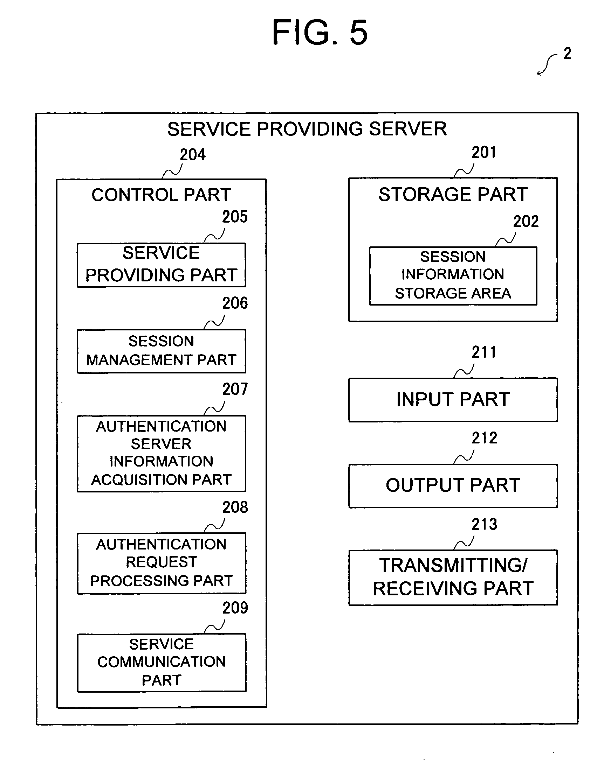

Fig. 5 is a schematic diagram showing an example of a service providing server 2. As shown in the figure, a service providing server 2 comprises a storage part 201, a control part 204, an input part 211, an output part 212, and a transmitting/receiving part 213.

The storage part 201 comprises a session information storage area 202.

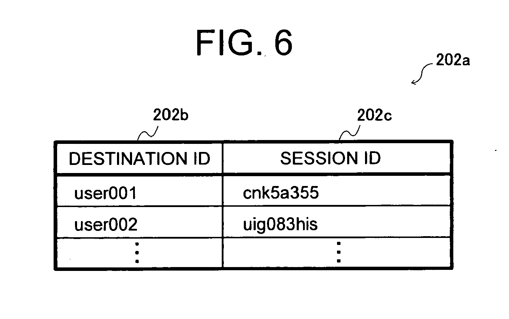

The session information storage area 202 stores session information that specifies a session with another apparatus, which has been established by the service providing server 2 through the network 6. For example, in the present embodiment, a session information table 202a as shown in Fig. 6 (a schematic diagram showing the session information table 202a) is stored in the session information storage area 202.

The session information table 202a has a destination ID field 202b and a session ID field 202c.

The destination ID field 202b stores information specifying a destination apparatus. Here, as the information specifying a destination apparatus, identification information uniquely assigned to each apparatus (terminal device 1) is stored. For example, if a destination apparatus is the terminal device 1, the user ID of the user using the terminal device 1 may be used.

The session ID field 202c stores information specifying a session with the apparatus specified in the destination ID field 202b. Here, as the information specifying a session, a session ID (which is identification information for uniquely identifying each session) is stored. For example, if a destination apparatus is a Web client, a character string delivered as a Cookie header value in an HTTP request from the Web client may be stored as a value of the session ID.

Returning to Fig. 5, the control part 204 comprises a service providing part 205, a session management part 206, an authentication server information acquisition part 207, an authentication request processing part 208, and a service communication part 209.

The service providing part 205 performs processing of providing a service requested by the terminal device 1 to the terminal device 1.

The session management part 206 performs processing of managing a session established with another apparatus by the service providing server 2. For example, when the service providing server 2 establishes a session with the terminal device 1, the session management part 206 generates a new record in the session information table 202a, stores the ID of the destination apparatus and the session ID in the generated record, and at the end of the established session, deletes the record corresponding to the session.

When a specific service is requested by the terminal device 1, the authentication server information acquisition part 207 performs processing of acquiring authentication server information, which specifies an authentication server 3 to perform authentication of the user of the terminal device 1, from the authentication intermediary server 4 directly through the transmitting/receiving part 213 and the network 6 or indirectly via the terminal device 1.

For example, in the case where the authentication intermediary server 4 notifies information in the form of an XDRS document as the OpenID Authentication described in Document 3, the service providing server 2 can directly make a request to the authentication intermediary server 4 for authentication server information by using HTTP or HTTPS, to acquire the authentication server information.

Further, the service providing server 2 may indirectly make a request to the authentication intermediary server 4 for authentication server information via the terminal device 1 by using an HTTP redirect according to Identity Provider Discovery Profile described in Document 2, to acquire the authentication server information.

The authentication request processing part 208 performs processing of transmitting, indirectly via the terminal device 1, an authentication request message for requesting authentication of the user to the authentication server 3 designated by authentication server information, when the authentication server information is received from the authentication intermediary server 4. For example, if the terminal device 1, the service providing server 2, and the authentication server 3 can communicate by using HTTP or HTTPS, then it is possible to transmit indirectly an authentication request message by using an HTTP redirect via the terminal device 1.

The service communication part 209 performs processing of transmitting and receiving information required for providing a service to the terminal device 1, through the transmitting/receiving part 213 and the network 6. For example, the service communication part 209 may be implemented as a protocol stack that enables HTTP communication for using Web sites and Web applications.

The input part 211 receives input of information.

The output part 212 outputs information.

The transmitting/receiving part 213 transmits and receives information via the network 6.

The above-described service providing server 2 can be implemented, for example, by a computer 9 as shown in Fig. 4.

For example, the storage part 201 can be implemented when the CPU 901 uses the memory 902 or the external storage 903. The control part 204 can be implemented when a prescribed program stored in the external storage 903 is loaded into the memory 902 and executed by the CPU 901. The input part 211 can be implemented when the CPU 901 uses the input unit 906. The output part 212 can be implemented when the CPU 901 uses the output unit 907. And, the transmitting/receiving part 213 can be implemented when the CPU 901 uses the transmitting/receiving unit 908.

The prescribed program may be downloaded from a storage medium 904 through the reader/writer 905 or from a network through the transmitting/receiving unit 908 to the external storage 903, and then loaded into the memory 902 and executed by the CPU 901. Or, the prescribed program may be directly loaded into the memory 902 from a storage medium 904 through the reader/writer 905 or from a network through the transmitting/receiving unit 908, and executed by the CPU 901.

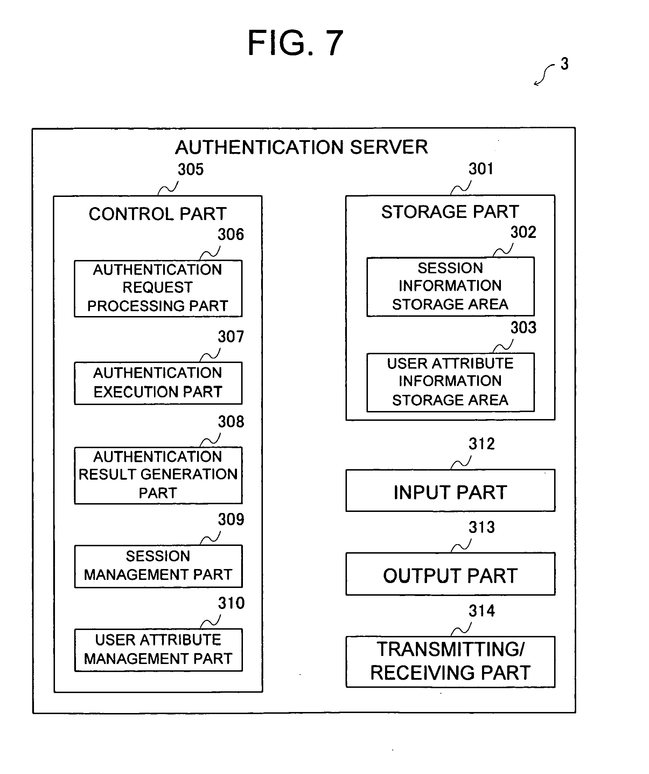

Fig. 7 is a schematic diagram showing an example of an authentication server 3. As shown in the figure, an authentication server 3 comprises a storage part 301, a control part 305, an input part 312, an output part 313, and a transmitting/receiving part 314.

The storage part 301 comprises a session information storage area 302 and a user attribute information storage area 303.

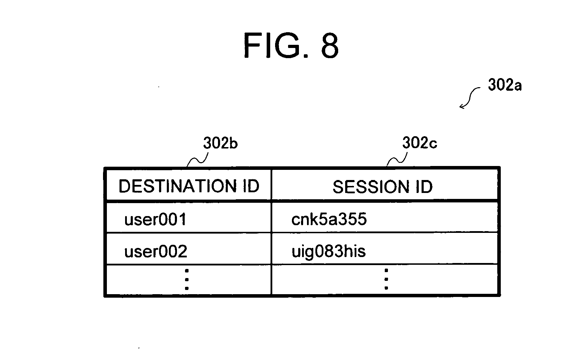

The session information storage area 302 stores session information that specifies a session with another apparatus, which has been established by the authentication server 3 through the network 6. For example, in the present embodiment, a session information table 302a as shown in Fig. 8 (a schematic diagram showing the session information table 302a) is stored in the session information storage area 302.

The session information table 302a has a destination ID field 302b and a session ID field 302c.

The destination ID field 302b stores information specifying a destination apparatus. Here, as the information specifying a destination apparatus, identification information for uniquely identifying each apparatus (terminal device 1) is stored. For example, if a destination apparatus is the terminal device 1, the user ID of the user using the terminal device 1 may be used.

The session ID field 302c stores information specifying a session with the apparatus specified in the destination ID field 302b. Here, as the information specifying a session, a session ID (which is identification information for uniquely assigned to each session) is stored. For example, if a destination apparatus is a Web client, a character string delivered as a Cookie header value in an HTTP request from the Web client may be stored as a value of the session ID.

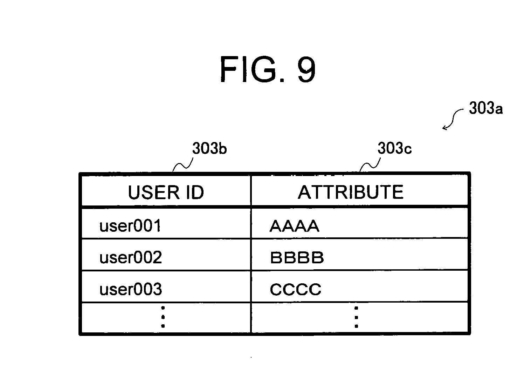

Returning to Fig. 7, the user attribute information storage area 303 stores user attribute information that specifies the attribute of a user to be authenticated by the authentication server 3. For example, in the present embodiment, a user attribute information table 303a as shown in Fig. 9 (a schematic diagram showing the user attribute information table 303a) is stored in the user attribute information storage area 303.

The user attribute information table 303a has a user ID field 303b and an attribute field 303c.

The user ID field 303b stores information specifying user of the terminal device 1. Here, as the information specifying user, a user ID, which is identification information for uniquely identifying each user, is stored.

The attribute field 303c stores information specifying the attribute of the user specified in the user ID field 303b. Here, as the information specifying the attribute of the user, the attribute field 303c stores information corresponding to the authentication scheme performed in the authentication server 3 out of pieces of information specifying the user's name, the user's mail address, the user's address, the user's digital certificate and the like.

The user attribute information is transmitted to the service providing server 2 within the limits of the policy set by the user, when a request is received from the service providing server 2. If necessary for authentication, the user attribute storage area 303 can store the password of the user.

The control part 305 comprises an authentication request processing part 306, an authentication execution part 307, an authentication result generation part 308, a session management part 309 and a user attribute management part 310.

The authentication request processing part 306 receives an authentication request message transmitted directly from the service providing server 2 or indirectly via the terminal device 1, and performs processing of acquiring parameters (session ID, user ID, and the like) contained in the received authentication request message. For example, if the terminal device 1, the service providing server 2 and the authentication server 3 can communicate by using HTTP or HTTPS, then the authentication server 3 can receive, by using an HTTP redirect, an authentication request message transmitted from the service providing server 2 indirectly via the terminal device 1.

The authentication execution part 307 performs processing required for authentication of a user. In the present embodiment, the authentication execution part 307 requests information for proving user's identity from the terminal device 1 through the transmitting/receiving part 314 and the network 6. For example, in the case where the authentication scheme performed by the authentication server 3 is the TLS client authentication, the authentication execution part 307 can perform user authentication by transmitting a random number sequence to the terminal device 1 and verifying whether information returned from the terminal device 1 is calculated with the secret key held by the terminal device 1. This verification of the returned information is performed by using the digital certificate of the terminal device 1 stored in the user attribute storage area 303.

The authentication result generation part 308 generates authentication result information that specifies the result of user authentication performed by the authentication execution part 307. As the authentication result information, an XML document called SAML Assertion described in Document 1 can be used.

The session management part 309 performs processing of managing a session established with another apparatus by the authentication server 3. For example, when the authentication server 3 establishes a session with the terminal device 1, the session management part 309 generates a new record in the information table 302a, stores the ID of the destination apparatus and a session ID in the new record, and at the end of the established session, deletes the record corresponding to the session.

On receiving a request from the terminal device 1, the user attribute management part 310 performs processing of generating, updating, or deleting user attribute information stored in the user attribute storage area 303.

Further, when an attribute acquisition request message is received from the service providing server 2 through the transmitting/receiving part 314 and the network 6, the user attribute management part 310 performs processing of transmitting the requested user attribute information to the service providing server 2 within the limits of the policy set by the user.

The input part 312 receives input of information.

The output part 313 outputs information.

The transmitting/receiving part 314 transmits and receives information via the network 6.

The above-described authentication server 3 can be implemented, for example, by a computer 9 as shown in Fig. 4.

For example, the storage part 301 can be implemented when the CPU 901 uses the memory 902 or the external storage 903. The control part 305 can be implemented when a prescribed program stored in the external storage 903 is loaded into the memory 902 and executed by the CPU 901. The input part 312 can be implemented when the CPU uses the input unit 906. The output part 313 can be implemented when the CPU 901 uses the output unit 907. And, the transmitting/receiving part 314 can be implemented when the CPU 901 uses the transmitting/receiving unit 908.

The prescribed program may be downloaded from a storage medium 904 through the reader/writer 905 or from a network through the transmitting/receiving unit 908 to the external storage 903, and then loaded into the memory 902 and executed by the CPU 901. Or, the prescribed program may be directly loaded into the memory 902 from a storage medium 904 through the reader/writer 905 or from a network through the transmitting/receiving unit 908, and executed by the CPU 901.

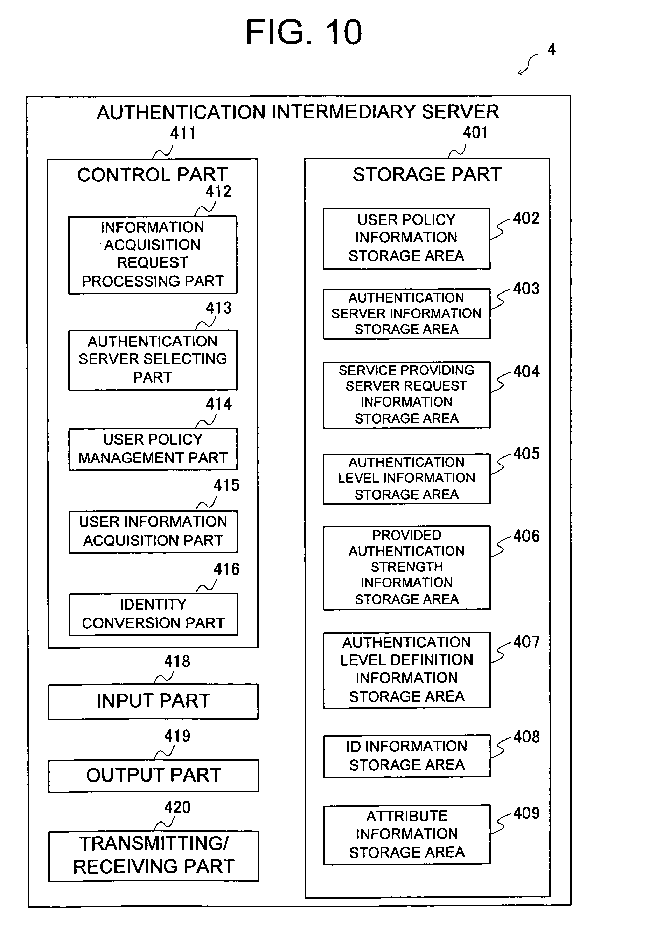

Fig. 10 is a schematic diagram showing an example of configuration of the authentication intermediary server 4.

As shown in the figure, the authentication intermediary server 4 comprises a storage part 401, a control part 411, an input part 418, an output part 419, and a transmitting/receiving part 420.

The storage part 401 comprises a user policy information storage area 402, an authentication server information storage area 403, a service providing server request information storage area 404, an authentication level information storage area 405, a provided authentication strength information storage area 406, an authentication level definition information storage area 407, an ID information storage area 408, and an attribute information storage area 409.

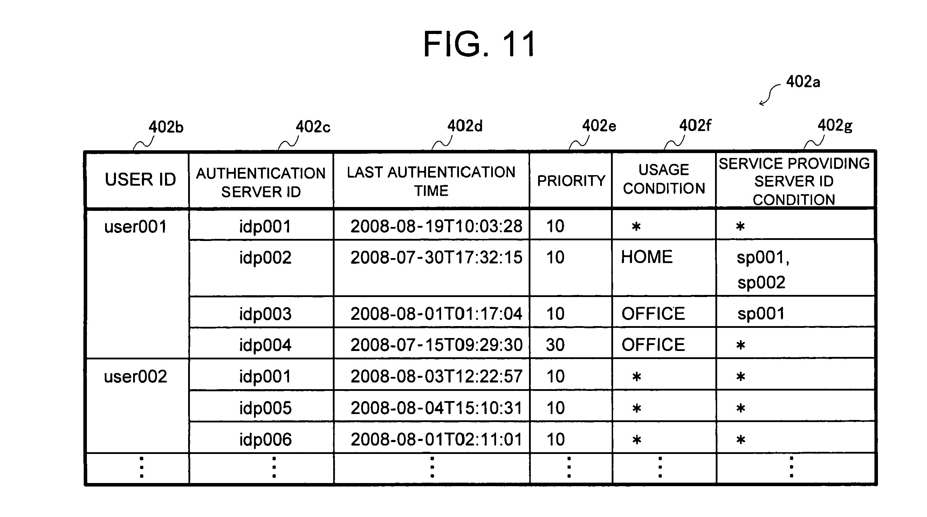

The user policy information storage area 402 stores user policy information for each user, which specifies a selection guideline for selecting an authentication server 3. For example, in the present embodiment, a user policy information table 402a as shown in Fig. 11 (a schematic diagram showing the user policy information table 402a) is stored in the user policy information storage area 402.

The user policy information table 402a has a user ID field 402b, an authentication server ID field 402c, a last authentication time field 402d, a priority field 402e, a usage condition field 402f, and a service providing server ID condition field 402g.

The user ID field 402b stores information specifying user of the terminal device 1. Here, as the information specifying user, a user ID (which is identification information assigned uniquely to each user) is stored.

Here, one user ID is associated with one or more pieces of authentication server related information in the form of a record (i.e. a line in the table). Each piece of authentication server related information comprises an authentication server ID, a last authentication time, a priority, and an usage condition.

The authentication server ID field 402c stores information (here, an authentication server ID) specifying an authentication server 3 that can authenticate the user specified in the user ID field 402b. For example, if an authentication server 3 accepts connection according to HTTP, a URL such as "http://www.hitachi.com/" can be used as a value of the authentication server ID field 402c.

The last authentication time field 402d stores information (here, year-month-date and time) specifying the last time when the authentication server 3 specified in the authentication server ID field 402c was selected for authentication of the user specified in the user ID field 402b.

The priority field 402e stores information specifying a priority of selecting the authentication server 3 specified in the authentication server ID field 402c for authentication of the user specified in the user ID field 402b. In the present embodiment, the smaller the numerical value stored in the priority field 402e is, the higher the priority of selection (i.e. the degree of priority given to selecting the authentication server 3) is, although this example is not intended to be limitation.

The usage condition field 402f stores information specifying condition on use of the authentication server 3 specified in the authentication server ID field 402c for authentication of the user specified in the user ID field 402b. Here, as the condition on use of the authentication server 3, may be used the user's presence information, the presence information of the terminal device 1 used by the user, the type of the terminal device 1 used by the user, or the like, for example.

In the case where the usage condition field 402f stores the symbol "*", it is indicated that there is no condition to be satisfied when the authentication server 3 specified in the authentication server ID field 402 is used (i.e. use of the authentication server 3 is unconditional).

The service providing server ID condition field 402g stores information (here, a service providing server ID) specifying a service providing server 2 that selects the authentication server specified in the authentication server ID field 402c for authentication of the user specified in the user ID field 402b. For example, use of the authentication server specified in the authentication server ID field 402c for authentication of the user specified in the user ID field 402b can be limited to the case where an authentication request has been received from the service providing server 2 specified in the service providing server ID condition field 402g.

In the case where the symbol "*" is stored in the service providing server ID condition field 402g, it is meant that the service providing server ID field in question stores all the service providing server IDs (i.e. there is no limitation to specific service providing server(s) 2).

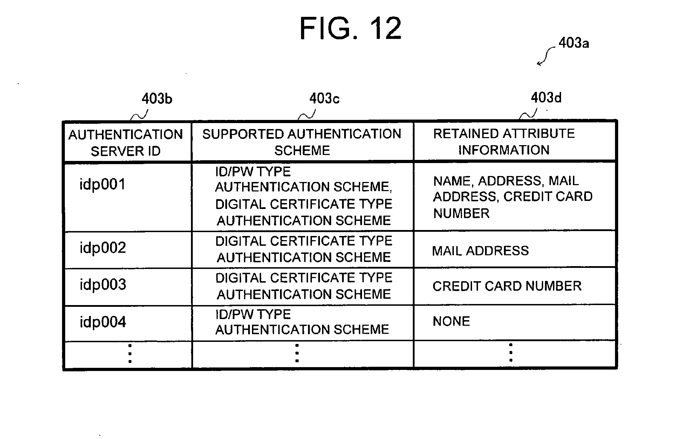

Returning to Fig. 10, the authentication server information storage area 403 stores authentication server information that specifies: an authentication server 3 that the authentication intermediary server 4 can introduce to a service providing server 2; an authentication scheme supported by that authentication server 3; and user's attribute information retained by that authentication server 3. For example, in the present embodiment, the authentication server information storage area 403 stores an authentication server information table 403a as shown in Fig. 12 (a schematic diagram showing the authentication server information table 403a).

The authentication server information table 403a has an authentication server ID field 403b, a supported authentication scheme field 403c, and a retained attribute information field 403d.

The authentication server ID field 403b stores information specifying an authentication server 3. Here, an authentication server ID (which is identification information for uniquely identifying each authentication server 3) is stored.

One authentication server ID is associated with one or more supported authentication schemes and one or more pieces of retained attribute information in the form of a record (i.e. line in the table).

The supported authentication scheme field 403c stores information specifying a type of authentication scheme that can be performed by the authentication server 3 specified in the authentication server ID field 403b. Here, as the information specifying a type of authentication scheme, an authentication scheme name, which is identification information for uniquely identifying each authentication scheme, is stored.

The retained attribute information field 403d stores information specifying a type of user's attribute information retained by the authentication server 3 specified in the authentication server ID field 403b is stored. Here, as the information specifying a type of user's attribute information, is stored a type of user's attributes such as the user's name, address, mail address, credit card number or the like is stored.

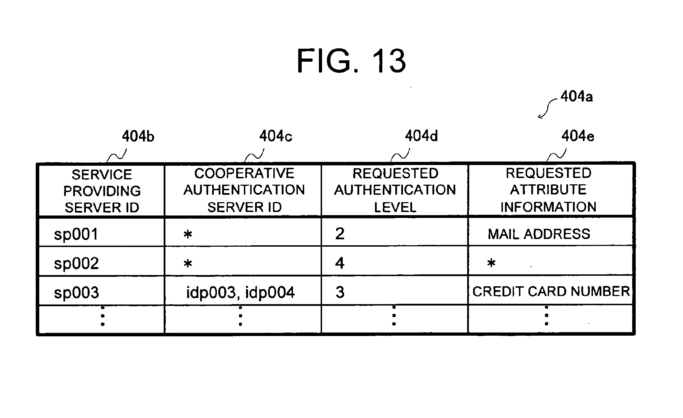

Returning to Fig. 10, the service providing server request information storage area 404 stores service providing server request information that specifies a selection guideline for selecting an authentication server 3 for each service providing server 2. For example, in the present embodiment, a service providing server request information table 404a as shown in Fig. 13 (a schematic diagram showing the service providing server request information table 404a) is stored in the service providing server request information storage area 404.

The service providing server request information table 404a has a service providing server ID field 404b, a cooperative authentication server ID field 404c, a requested authentication level field 404d, and a requested attribute information field 404e.

The service providing server ID field 404b stores information specifying a service providing server 2. Here, as the information specifying a service providing server 2, a service providing server ID, which is identification information for uniquely identifying each service providing server 2, is stored.

One service providing server ID is associated with one or more cooperative authentication server IDs, one or more requested authentication level, and one or more pieces of requested attribute information in the form of a record (i.e. a line in the table).

The cooperative authentication server ID field 404c stores information specifying an authentication server 3 with which the service providing server 2 specified in the service providing server ID field 404b has performed preliminary cooperation processing for entrusting authentication. Here, as the information specifying an authentication server 3, an authentication server ID, which is identification information for uniquely identifying each authentication server 3, is stored. In the case where the cooperative authentication server ID field 404c stores the symbol "*", it is meant that the service providing server 2 specified in the service providing server ID field 404b does not require preliminary cooperation processing with an authentication server 3.

The requested authentication level field 404d stores information specifying an authentication safety (strength) level that is requested at the time of providing service by the service providing server 2 specified in the service providing server ID field 404b.

The requested attribute information field 404e stores information specifying a type of user's attribute information whose disclosure the service providing server 2 specified in the service providing server ID field 404b requests from an authentication server 3. In the case where the requested attribute information field 404e stores the symbol "*", it is meant that the service providing server 2 specified in the service providing server ID field 404b does not request specific attribute information from an authentication server 3.

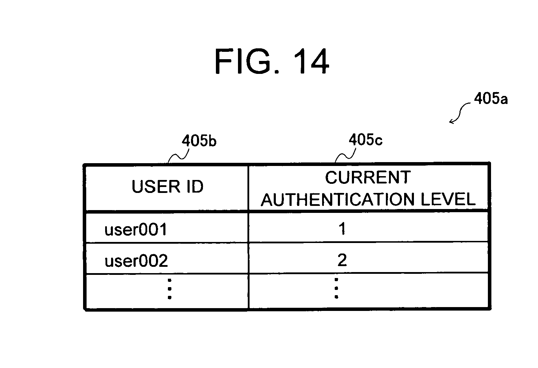

Returning to Fig. 10, the authentication level information storage area 405 stores authentication level information that specifies the most recent authentication level applied to a user (i.e. current authentication level). For example, in the present embodiment, an authentication level information table 405a as shown in Fig. 14 (a schematic diagram showing the authentication level information table 405a) is stored in the authentication level information storage area 405.

The authentication level information table 405a has a user ID field 405b and a current authentication level field 405c.

The user ID field 405b stores information specifying a user. Here, a user ID, which is identification information for uniquely identifying each user, is stored.

The current authentication level field 405c stores information specifying the most recent authentication level (currently-effective authentication level) of authentication that the user specified in the user ID field 405b has undergone.

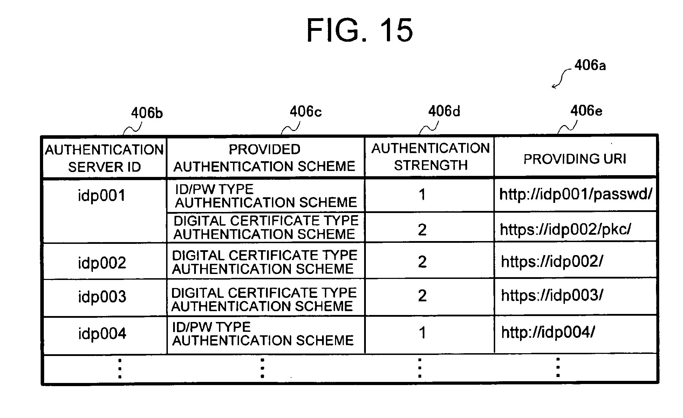

Returning to Fig. 10, the provided authentication strength information storage area 406 stores provided authentication strength information that specifies an authentication scheme provided by an authentication server 3 and the authentication strength of that authentication scheme. For example, in the present embodiment, a provided authentication strength information table 406a as shown in Fig. 15 (a schematic diagram showing the provided authentication strength information table 406a) is stored in the provided authentication strength information storage area 406.

The provided authentication strength information table 406a has an authentication server ID field 406b, a provided authentication scheme field 406c, an authentication strength field 406d, and a providing URI field 406e.

The authentication server ID field 406b stores information specifying an authentication server 3. Here, an authentication server ID (which is identification information for uniquely identifying each authentication server 3) is stored.

The provided authentication scheme field 406c stores information specifying an authentication scheme provided by the authentication server 3 specified in the authentication server ID field 406b.

The authentication strength field 406d stores information specifying authentication strength of authentication performed by the authentication server 3 specified in the authentication server ID field 406b according to the authentication scheme specified in the provided authentication scheme field 406c. Here, in the present embodiment, the larger a value stored in the authentication strength field 406d is, the higher the authentication strength is (i.e. the higher the safety of the authentication is).

The providing URI field 406e stores information specifying a URI at which the authentication server 3 specified in the authentication server ID field 406b provides authentication according to the authentication scheme specified in the provided authentication scheme field 406c.

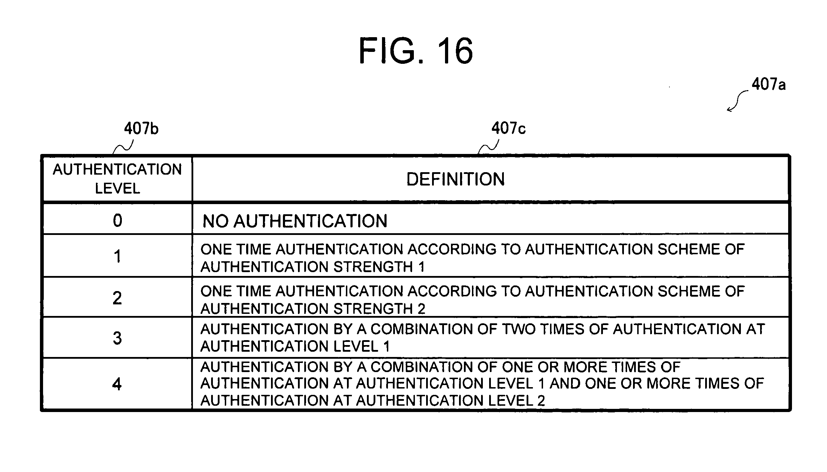

Returning to Fig. 10, the authentication level definition information storage area 407 stores authentication level definition information that specifies a definition of authentication level. For example, in the present embodiment, an authentication level definition information table 407a as shown in Fig. 16 (a schematic diagram showing the authentication level definition information table 407a) is stored in the authentication level definition information storage area 407.

The authentication level definition information table 407a has an authentication level field 407b and a definition field 407c.

The authentication level field 407b stores information specifying an authentication level.

The definition field 407c stores information specifying an authentication method that should be performed for satisfying the authentication level specified in the authentication level field 407b. Here, in the present embodiment, the definition field 407c specifies an authentication method corresponding to each authentication level by a combination of authentication strength and the number of times of authentication.

In connection with the definition of authentication level in the present embodiment, in the case where a service provider requests a certain authentication level and a user satisfies an authentication level of a larger figure than that of the requested level, then it is judged that the user satisfies the requested authentication level.

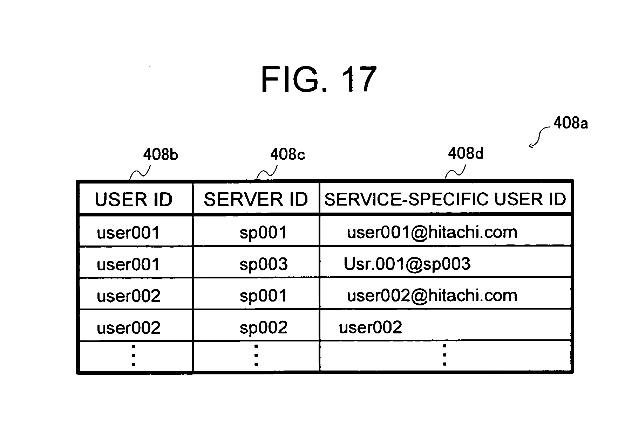

Returning to Fig. 10, the ID information storage area 408 stores ID information that specifies a specific user ID used by a user in each service providing server 2. For example, in the present embodiment, an ID information table 408a as shown in Fig. 17 (a schematic diagram showing the ID information table 408a) is stored in the ID information storage area 408.

The ID information table 408a has a user ID field 408b, a server ID field 408c, and a service-specific user ID field 408d.

The user ID field 408b stores information specifying a user. Here, a user ID, which is identification information for uniquely identifying a user, is stored.

The server ID field 408c stores information specifying a service providing server 2 from which the user specified in the user ID field 408b receives service. Here, a service providing server ID, which is identification information for uniquely identifying each service providing server 2, is stored.

The service-specific user ID field 408d stores information that specifies identification information (a service-specific user ID) used by the user specified in the user ID field 408b in the service providing server 2 specified in the service ID field 408c.

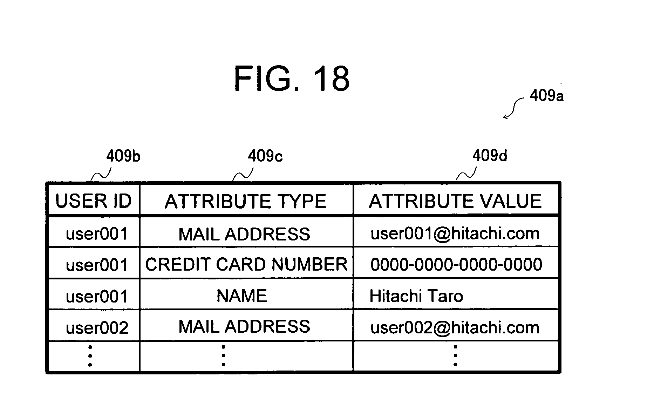

Returning to Fig. 10, the attribute information storage area 409 stores attribute information that specifies attribute of a user. For example, in the present embodiment, an attribute information table 409a as shown in Fig. 18 (a schematic diagram showing the attribute information table 409a) is stored in the attribute information storage area 409.

The attribute information table 409a has a user ID field 409b, an attribute type field 409c, and an attribute value field 409d.

The user ID field 409b stores information specifying a user. Here, a user ID, which is identification information for uniquely identifying each user, is stored.

The attribute type field 409c stores information specifying a type of attribute of the user specified in the user ID field 409b.

The attribute value field 409d stores information that specifies a value of attribute used by the user specified in the user ID field 409b with respect to the type specified in the attribute type field 409c.

Returning to Fig. 10, the control part comprises an information acquisition request processing part 412, an authentication server selecting part 413, a user policy management part 414, a user information acquisition part 415, and an identity conversion part 416.

When an information acquisition request message is received through the transmitting/receiving part 420 and the network 6 directly from a service providing server 2 or indirectly via the terminal device 1, then the information acquisition request processing part 412 acquires the user ID and the service providing server ID contained in the received information acquisition request message, and outputs them to the authentication server selecting part 413.

If the received information acquisition request message does not include a user ID, it is possible to return a response message (for example, an HTTP response including a form tag) requesting input of a user ID to the terminal device 1 through the transmitting/receiving part 420 and the network 6, to acquire the user ID.

When the authentication server selecting part 413 acquires the user ID and the service providing server ID from the information acquisition request processing part 412, the authentication server selecting part 413 acquires information corresponding to the acquired user ID and service providing server ID from the user policy information stored in the user policy information storage area 402, the authentication server information stored in the authentication server information storage area 403, and the service providing server request information stored in the service providing server request information storage area 404 of the storage part 401, and selects an authentication server 3 to be used for authentication of the user by referring to the user's presence information acquired by the below-described user information acquisition part 415.

Further, the authentication server selecting part 413 transmits authentication server information specifying the selected authentication server 3 directly to the service providing server 2 or indirectly via the terminal device 1. For example, as in OpenID Authentication described in Document 3, it is possible to express the information of the authentication server 3 as an XDRS document and transmit it to the service providing server 2. Or, according to Identity Provider Discovery Profile described in Document 2, the authentication server information may be transmitted to the service providing server 2 indirectly via the terminal device 1 by using an HTTP redirect.

The user policy management part 414 acquires information that specifies the user ID, the authentication server ID of the authentication server 3 used by the user specified by that user ID, the priority of the authentication server 3, and conditions of selecting the authentication server 3 (the usage condition, the service providing server ID condition) from the terminal device 1 through the transmitting/receiving part 420 and the network 6, and generates, updates, or deletes a record in the user policy information table 402a stored in the user policy information storage area 402 of the storage part 401.

The user information acquisition part 415 transmits a presence information acquisition request specifying a user ID to the presence server 5 through the transmitting/receiving part 420 and the network 6, to acquire the presence information of the user corresponding to the user ID from the presence server 5. Or, if there is on the network 6 a server that manages user information similar to the presence information, the user information is acquired from that server.

The identity conversion part 416 performs processing of managing the ID information stored in the ID information storage area 408 and the attribute information stored in the attribute information storage area 409.

Further, the identity conversion part 416 performs processing of acquiring requested attribute information requested by a service providing server 2 from the attribute information storage area 409 and transmits the acquired information directly to the service providing server 2 or indirectly via the terminal device 1.

The input part 418 receives input of information.

The output part 419 outputs information.

The transmitting/receiving part 420 transmits and receives information through the network 6.

The above-described authentication intermediary server can be implemented, for example, by a computer 9 as shown in Fig. 4.

For example, the storage part 401 can be implemented when the CPU 901 uses the memory 902 or the external storage 903. The control part 411 can be implemented when a prescribed program stored in the external storage 903 is loaded into the memory 902 and executed by the CPU 901. The input part 418 can be implemented when the CPU 901 uses the input unit 906. The output part 419 can be implemented when the CPU 901 uses the output unit 907. And, the transmitting/receiving part 420 can be implemented when the CPU 901 uses the transmitting/receiving unit 908.

The prescribed program may be downloaded from a storage medium 904 through the reader/writer 905 or from a network through the transmitting/receiving unit 908 to the external storage 903, and then loaded into the memory 902 and executed by the CPU 901. Or, the prescribed program may be directly loaded into the memory 902 from a storage medium 904 through the reader/writer 905 or from a network through the transmitting/receiving unit 908, and executed by the CPU 901.

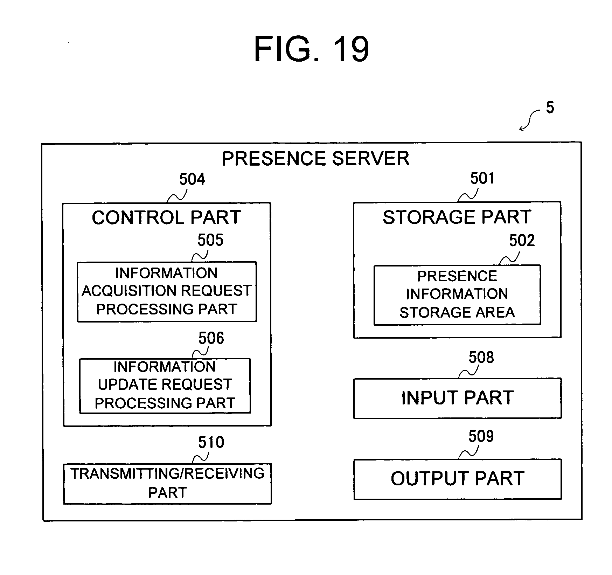

Fig. 19 is a schematic diagram showing an example of the presence server 5. As shown in the figure, the presence server 5 comprises a storage part 501, a control part 504, an input part 508, an output part 509, and a transmitting/receiving part 510.

The storage part 501 comprises a presence information storage area 502.

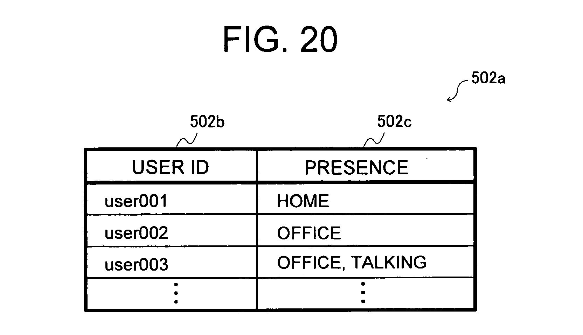

The presence information storage area 502 stores presence information that specifies situation of the user of the terminal device 1. For example, in the present embodiment, a presence information table 502a as shown in Fig. 20 (a schematic diagram showing the presence information table 502a) is stored in the presence information storage area 502.

The presence information table 502a has a user ID field 502b and a presence information field 502c.

The user ID field 502b stores information that specifies a user. Here, a user ID, which is identification information for uniquely identifying each user, is stored.

The presence information field 502c stores presence information that specifies situation (presence) of the user specified in the user ID field 502b.

Returning to Fig. 19, the control part 504 comprises an information acquisition request processing part 505 and an information update request processing part 506.

When the information acquisition request processing part 505 receives an information acquisition request message through the transmitting/receiving part 510 and the network 6 from the authentication intermediary server 4, the information acquisition request processing part 505 acquires a user ID contained in the received information acquisition request message, and searches for presence information stored in the presence information storage area 502 by using the user ID as a key. When the presence information of the user specified in the user ID is acquired as a result of the search, the information acquisition request processing part 505 returns the presence information through the transmitting/receiving part 510 and the network 6 to the authentication intermediary server 4 that has sent the information acquisition request message.

When the information update request processing part 506 receives an information update request message from the terminal device 1 through the transmitting/receiving part 510 and the network 6, the information update request processing part 506 acquires the user ID and the presence information contained in the received information update request message, and generates or update a record corresponding to the user ID in the presence information storage area 502.

The input part 508 receives input of information.

The output part 509 outputs information.

The transmitting/receiving part 510 transmits and receives information through the network 6.

The above-described presence server 5 can be implemented, for example, by a computer 9 as shown in Fig. 4.

For example, the storage part 501 can be implemented when the CPU 901 uses the memory 902 or the external storage 903. The control part 504 can be implemented when a prescribed program stored in the external storage 903 is loaded into the memory 902 and executed by the CPU 901. The input part 508 can be implemented when the CPU 901 uses the input unit 906. The output part 509 can be implemented when the CPU 901 uses the output unit 907. And, the transmitting/receiving part 510 can be implemented when the CPU 901 uses the transmitting/receiving unit 908.

The prescribed program may be downloaded from a storage medium 904 through the reader/writer 905 or from a network through the transmitting/receiving unit 908 to the external storage 903, and then loaded into the memory 902 and executed by the CPU 901. Or, the prescribed program may be directly loaded into the memory 902 from a storage medium 904 through the reader/writer 905 or from a network through the transmitting/receiving unit 908, and executed by the CPU 901.

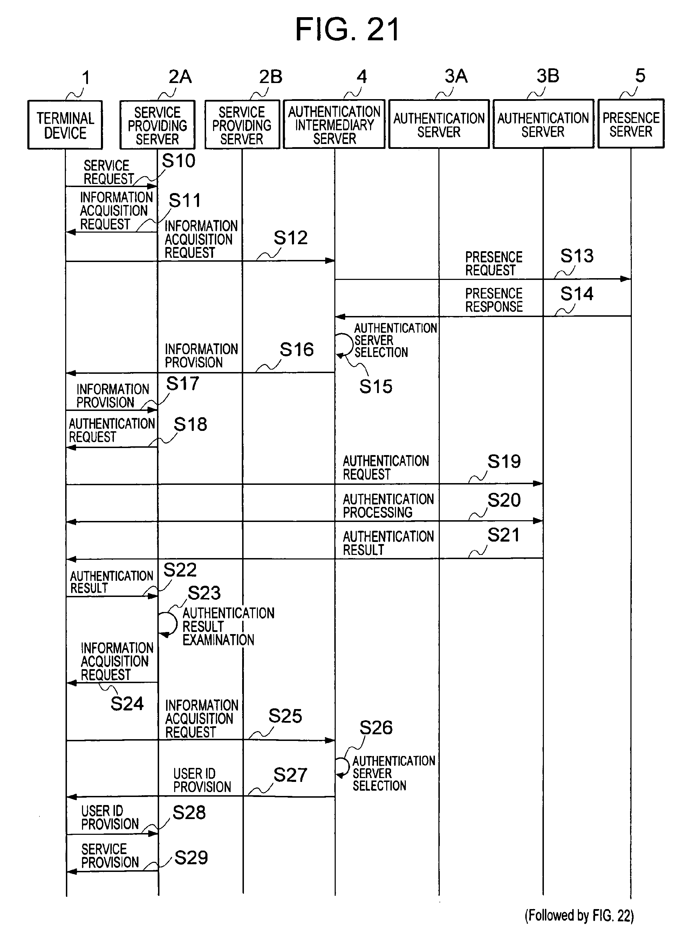

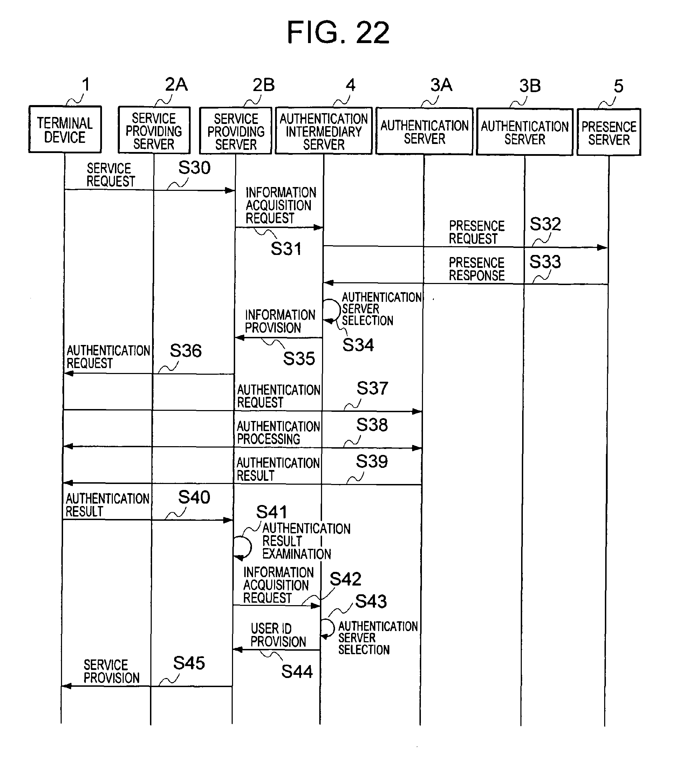

Figs. 21 and 22 are sequence diagrams showing an example of processing performed when authentication is performed in the authentication system 10.

The present sequences show processing in each apparatus in the case where a user identified by a user ID "user001" uses the terminal device 1 requests provision of service from a service providing server 2A identified by a service providing server ID "sp001" and a service providing server 2B identified by a service providing server ID "sp002". Here, it is assumed that a session has not been established between the terminal device 1 and another apparatus.

Further, it is assumed that an authentication server 3A is identified by an authentication server ID "idp001" and an authentication server 3B by an authentication server ID "idp002".

Further, it is assumed that, when the service providing server 2A identified by the service providing server ID "sp001" requests acquisition (selection) of an authentication server 3 from the authentication intermediary server 4, the service providing server 2A transmits a request message indirectly via the terminal device 1. On the other hand, when the service providing server 2B identified by the service providing server ID "sp002" requests acquisition (selection) of an authentication server 3 from the authentication intermediary server 4, it is assumed that the service providing server 2B transmits a request message directly not via the terminal device 1.

Fig. 21 shows a sequence in the case where the user of the terminal device 1 receives provision of service from the service providing server 2A.

First, when the user of the terminal device 1 performs through the input part 115 a service request operation for receiving provision of service from the service providing server 2A, then the service request generation part 107 of the terminal device 1 generates a service request message specifying the user ID "user001" of the user of the terminal device 1, and transmits the generated service request message to the service providing server 2A through the transmitting/receiving part 117 and the network 6 (S10). Here, in the present embodiment, the service request message is described by using a GET request, a POST request, or the like of HTTP, although this example is not intended to be limitation.

When the service providing server 2A receives the service request message through the transmitting/receiving part 211 and the network 6, then the service communication part 209 examines whether the service request message includes session information (the present sequence is described assuming that session information is not included). When it is known that session information does not exist, the authentication server information acquisition part 207 generates an information acquisition request message in which the user ID "user001" and the service providing server ID "sp001" are specified, and transmits the generated message to the authentication intermediary server 4 through the transmitting part 213 and the network 6 via the terminal device 1 (S11, S12).

When the authentication intermediary server 4 receives the information acquisition request message through the transmitting/receiving part 412 and the network 6, the information acquisition request processing part 412 acquires the user ID and the service providing server ID contained in the received information acquisition request message, and proceeds to processing of selecting candidates for an authentication server to be used. Here, "user001" is acquired as the user ID and "sp001" is acquired as the service providing server ID.

Then, the user information acquisition part 415 generates a presence information acquisition request message specifying the user ID acquired by the information acquisition request processing part 412, and transmits the generated presence information acquisition request message to the presence server 5 through the transmitting/receiving part 420 and the network 6 (S13).

When the presence server 5 receives the presence information acquisition request message, the information acquisition request processing part 505 acquires, from the presence information storage area 502, the presence information corresponding to the user ID (here "user001") contained in the received presence information acquisition request message, and returns a response message including the acquired presence information to the authentication intermediary server 4 (S14). For example, in the case of the presence information table 502 shown in Fig. 20, the information specifying "home" is acquired as the presence information corresponding to the user ID "user001".

Next, the authentication server selecting part 413 performs processing of selecting an authentication server 3 (S 15).

For example, first, by using the user ID "user001" as a key, the authentication server selecting part 413 acquires a set of pieces (i.e. records) of policy information (authentication server ID, last authentication time, priority, usage condition, service providing server ID condition) from the user policy information table 402a stored in the user policy information storage area 402, and stores the acquired set as a group of candidates for the authentication server 3 to be used in the storage part 401. For example, in the case of the user policy information table 402a shown in Fig. 11, four records (i.e. the four records corresponding to the authentication server IDs "idp001", "idp002", "idp003" and "idp004") are acquired from the table 402a as the pieces of user policy information corresponding to the user ID "user001".

Next, by using the service providing server ID "sp001" as a key, the authentication server selecting part 413 acquires service providing server request information (cooperative authentication server ID, requested authentication level, and requested attribute information) from the service providing server request information table 404a stored in the service providing server request information storage area 404. For example, in the case of the service providing server request information table 404a shown in Fig. 13, the information stored in the uppermost record for which the cooperative authentication server ID is "*", the requested authentication level is "2" and the requested attribute information is "mail address" is acquired as the service providing server request information corresponding to the service providing server ID "sp001".

Subsequently, the authentication server selecting part 407 performs processing of judging a shortfall of authentication strength.

First, the authentication server selecting part 413 acquires the most recent (i.e. current) authentication level corresponding to the user ID "user001" from the authentication level information table 405a stored in the authentication level information storage area 405. Here, it is assumed that the user identified by the user ID "user001" has not been authenticated yet and the current authentication level is "0".

As described above, according to the service providing server request information acquired from the service providing server request information table 404a, the requested authentication level is "2". Therefore, the authentication server selecting part 413 judges that the authentication strength is in short.

Then, the authentication server selecting part 413 refers to the authentication level definition table 407a, and compares the current authentication level "0" of the user identified by the user ID "user001" with the requested authentication level "2" in order to judge what authentication strength is required for satisfying the requested authentication level "2". For example, in the case of the authentication level definition table 407a shown in Fig. 16, the authentication level "0" means the state that "authentication has not been performed yet", while the authentication level "2" means the state that "authentication is performed one time according to an authentication scheme of the authentication strength 2". Thus, it is judged that a shortfall of authentication strength is "2" and one time execution of authentication of the authentication strength "2" can satisfy the requested authentication level "2".

Subsequently, the authentication server selecting part 407 performs processing of narrowing down the candidates for the authentication server 3 to be used.

First, out of the group of candidates of the authentication server 3 to be used stored in the storage part 401, the authentication server selecting part 407 selects authentication servers that has an authentication server ID coincident with the cooperative authentication server ID contained in the service providing server request information acquired from the service providing server request information table 404a by using the service providing server ID "sp001" as a key. Here, the value of the cooperative authentication server ID for the service providing server "sp001" is "*", and thus all the authentication servers 3 in the group of candidates of the authentication server 3 to be used are left as the candidates.

Next, out of the group of candidates for the authentication server 3 to be used, the authentication server selecting part 407 selects only authentication servers 3 whose value of the service providing server ID condition includes the service providing server ID of the service providing server 2 as the source of the information acquisition request message, and deletes the others from the group of candidates. Here, the ID "sp001" of the service providing server as the source of the information acquisition request message is included in the service providing server ID condition of each record, and thus all the authentication servers 3 in the group of candidates are left as the candidates.

Next, from the authentication server information table 403a stored in the authentication server information storage area 403, the authentication server selecting part 407 acquires authentication server information (supported authentication scheme and retained attribute information) corresponding to the authentication server IDs remaining in the group of candidates for the authentication server 3 to be used, and adds the acquired information to (i.e. associates the acquired information with) each of the group of candidates in the storage area 401.

Next, among the authentication servers 3 in the group of candidates for the authentication server 3 to be used, the authentication server selecting part 407 selects only authentications servers 3 for which the authentication strength conforms with the shortfall of authentication strength judged as described above and the retained attribute information conforms with the requested attribute information from the authentication strength information table 406a stored in the authentication strength information storage area 406.

Here, the shortfall of authentication strength is "2", and "mail address" is designated as the requested attribute information. Thus, as authentication servers complying with these conditions, the authentication servers 3 of "idp001" and "idp002" are left in the group of candidates. The authentication servers 3 of "idp004" and "idp003" are deleted from the group of candidates, since the authentication strength of the former is "1" and the retained attribute information of the latter is limited to "credit card number" and does not include the requested attribute information "mail address".

Next, among the authentication servers 3 left in the group of candidates, the authentication server selecting part 407 leaves only authentication servers 3 whose value of usage condition conforms with the user's presence information acquired in the step S14, and deletes the others from the group of candidates. Here, the information specifying "home" has been acquired as the presence information, and thus, among the group of candidates, the candidates of "idp001" and "idp002" whose usage condition conforms with "home" or "*" (which means that no usage condition is designated) are left in the group of candidates.

Next, the authentication server selecting part 407 leaves the candidates of the highest priority among the group of candidates, and deletes the others from the group of candidates. In the case of the user policy information table 402a shown in Fig. 11, "idp001" and "idp002" in the group of candidates have the same priority "10", and thus narrowing down is not performed.

Next, the authentication server selecting part 407 selects the candidate whose last authentication time is oldest among the group of candidates. In the case of the user policy information table 402a shown in Fig. 11, the last authentication time of "idp001" is "2008-08-19T10:03:28" and that of "idp002" is "2008-07-30T17:32:15", and thus "idp002" is selected as the candidate having the oldest last authentication time.

In this stage, with respect to the authentication server 3 selected as the candidate, the value of the last authentication time field 402d of the user policy information table 402a stored in the user policy storage area 402 is replaced by the current time. Here, the last authentication time field of "idp002" is rewritten to the current time (for example, 2008-08-22T16:50:36).

This ends the processing of the step S15 for selecting an authentication server 3.

Next, the authentication server selecting part 413 acquires the providing URI of the authentication scheme (for coping with the shortfall of authentication strength) provided by the authentication server 3B selected as the candidate, from the providing URI field 406e of the provided authentication strength information table 406a stored in the provided authentication strength information storage area 406. Then, the authentication server selecting part 413 generates a response message (corresponding to the information acquisition request message) that contains information specifying the acquired providing URI, and transmits the message to the service providing server 2A indirectly via the terminal device 1 (S16, S17). Here, the providing URI "https://idp002/" of the digital certificate type authentication scheme provided by the authentication server ID "idp002" is transmitted to the service providing server 2A indirectly via the terminal device 1.

When the service providing server 2 receives from the authentication intermediary server 4 the response message corresponding to the information acquisition request message, then the authentication server information acquisition part 207 acquires the providing URI from the received response message, and the authentication request processing part 208 transmits an authentication request message to the providing URI via the terminal device 1 (S 18, S 19).

In the authentication server 3B, the authentication execution part 307 performs authentication processing between the authentication server 3B and the terminal device 1 used by the user (S20). Here, as shown in the authentication server information table 403a of Fig. 12, the authentication server 3 identified by the authentication server ID "idp002" supports the digital certificate type authentication scheme, and thus the authentication execution part 307 requests a digital certificate of the user from the terminal device 1 through the transmitting/receiving part 314 and the network 6, to acquire the digital certificate.

Then, the authentication execution part 307 examines the validity of the acquired digital certificate (here, description will be given assuming that the digital certificate is valid), and the authentication result generation part 308 generates an authentication result message indicating that the user has succeeded in the authentication, and transmits the message to the service providing server 2A indirectly via the terminal device 1 (S21, S22).

When the service providing server 2A receives the authentication result message from the authentication server 3B, the authentication request processing part 208 acquires information specifying the authentication result from the received authentication result message, and examines the validity of the authentication result (S23).

When the user's validity is ascertained as a result of verification of the authentication result, the authentication server information acquisition part 207 generates an information acquisition request message notifying that authentication according to the authentication scheme provided by the providing URI has been successful, and transmits the generated message to the authentication intermediary server 4 through the transmitting/receiving part 213 and the network 6 via the terminal device 1 (S24, S25).

When the authentication intermediary server 4 receives the information acquisition request message through the transmitting/receiving part 420 and the network 6, then the information acquisition request processing part 412 acquires the user ID and the service providing server ID contained in the received information acquisition request message, and proceeds to processing of selecting a candidate for the authentication server to be used (S26).

Here, because the current authentication level of the user identified by the user ID "user001" was updated to "2" in the above step S15, the authentication server selecting part 413 judges that additional authentication is not necessary. Thus, the authentication server selecting part 413 generates a response message that includes the user ID "user001" but not a providing URI, and transmits the generated response message to the service providing server 2A through the transmitting/receiving part 420 and the network 6 and via the terminal device 1 (S27, S28).

In the response message transmitted in the steps S27 and S28, the ID information (i.e. the service-specific user ID for the service providing server 2A) stored in the ID information storage area 408 and the attribute information (corresponding to the requested attribute information requested by the service providing server 2A) stored in the attribute information storage area 409 are included.

When the service providing server 2A receives the response message from the authentication intermediary server 4, then the authentication request processing part 208 acquires the user ID from the response message. The session management part 206 generates a new session ID, and stores a pair of the user ID and the session ID in the session information table 202a stored in the session information storage area 202. And, the service providing part 205 provides the requested service to the terminal device 1 (S29).

In providing the service, the service providing server 2A can use the ID information and the attribute information received in the steps S27 and S28. For example, the following usage can be considered. That is to say, these pieces of information may be used in login processing and verification processing necessary for the service provided by the service providing server 2A. Or, the credit card number contained in the attribute information may be used for payment for an article purchased via the service providing server 2A. Or, the mail address contained in the attribute information may be used for providing information from the service providing server 2A.

Next, following the sequence shown in Fig. 21, Fig. 22 shows a sequence in the case where the user of the terminal device 1 receives the service from the service providing server 2B.

First, when the user of the terminal device 1 performs a service request operation through the input part 115 of the terminal device 1 for receiving the service from the service providing server 2B, the service request generation part 107 of the terminal device 1 generates a service request message specifying the user ID "user001" of the user of the terminal device 1, and transmits the generated service request message to the service providing server 2B through the transmitting/receiving part 117 and the network 6 (S30).

When the service providing server 2B receives the service request message through the transmitting/receiving part 213 and the network 6, then the service communication part 208 examines whether the received service request message includes session information (here, description will be given assuming that session information is not included). If session information is not included, the authentication server information acquisition part 207 generates an information acquisition request message specifying the user ID and the service providing server ID, and transmits the message to the authentication intermediary server 4 through the transmitting/receiving part 213 and the network 6 (S31).

When the authentication intermediary server 4 receives the information acquisition request message through the transmitting/receiving part 420 and the network 6, then the information acquisition request processing part 412 acquires the user ID and the service providing server ID contained in the received message, and proceeds to processing of selecting candidates for the authentication server 3 to be used. Here, "user001" is acquired as the user ID, and "sp002" as the service providing server ID.

Next, the user information acquisition part 415 generates a presence information acquisition request message specifying the user ID acquired by the information acquisition request processing part 412, and transmits the generated presence information acquisition request message to the presence server 5 through the transmitting/receiving part 420 and the network 6 (S32).

In the presence server 5 receiving the presence information acquisition request message, the information acquisition request processing part 505 acquires from the presence information storage area 502 the presence information corresponding to the user ID (here, "user001") included in the received presence information acquisition request message, and returns a response message including the acquired presence information to the authentication intermediary server 4 (S33). For example, in the case of the presence information table 502 shown in Fig. 20, information specifying "home" is acquired as the presence information corresponding to the user ID "user001".

Next, the authentication server selecting part 413 performs processing of selecting an authentication server 3 (S34).

For example, first, by using the user ID "user001" as a key, the authentication server selecting part 413 acquires a set of pieces (i.e. records) of policy information (authentication server ID, last authentication time, priority, usage condition, service providing server ID condition) from the user policy information table 402a stored in the user policy information storage area 402, and stores the acquired set as a group of candidates for the authentication server 3 to be used in the storage part 401. For example, in the case of the user policy information table 402a shown in Fig. 11, four records (i.e. the four records corresponding to the authentication server IDs "idp001", "idp002", "idp003" and "idp004") are acquired from the top of the table 402a.

Next, by using the service providing server ID "sp002" as a key, the authentication server selecting part 413 acquires service providing server request information (cooperative authentication server ID, requested authentication level and requested attribute information) from the service providing server request information table 404a stored in the service providing server request information storage area 404. For example, in the case of the service providing server request information table 404a shown in Fig. 12, the information stored in the second record from the top, for which the cooperative authentication server ID is "*", the requested authentication level is "3" and the requested attribute information is "*", is acquired as the service providing server request information corresponding to the service providing server ID "sp002".

Subsequently, the authentication server selecting part 407 performs processing of judging a shortfall of authentication strength.

First, the authentication server selecting part 413 acquires the most recent (i.e. current) authentication level corresponding to the user ID "user001" from the authentication level information table 405a stored in the authentication level information storage area 405. Here, the user identified by the user ID "user001" has been authenticated according to the digital certificate type authentication scheme of "idp002" in the processing shown in Fig. 21, and thus the current authentication level is "2".

As described above, according to the service providing server request information acquired from the service providing server request information table 404a, the requested authentication level is "4". Therefore, the authentication server selecting part 413 judges that the authentication strength is in short.

Then, the authentication server selecting part 413 refers to the authentication level definition table 407a, and compares the current authentication level "2" of the user identified by the user ID "user001" with the requested authentication level "4" in order to judge what authentication strength is required for satisfying the requested authentication level "4". For example, in the case of the authentication level definition table 407a shown in Fig. 16, the authentication level "2" means the state that "authentication is performed one time according to an authentication scheme of the authentication strength 2", while the authentication level "4" means the state that "authentication is performed according to an authentication scheme of the authentication strength "1" and an authentication scheme of the authentication strength "2" each one or more times". Thus, it is judged that a shortfall of authentication strength is "1" and one time execution of authentication of the authentication strength "1" can satisfy the requested authentication level "4".

Subsequently, the authentication server selecting part 407 performs processing of narrowing down the candidates for the authentication server 3 to be used.

First, out of the group of candidates of the authentication server 3 to be used stored in the storage part 401, the authentication server selecting part 407 selects authentication servers that has an authentication server ID coincident with the cooperative authentication server ID contained in the service providing server request information acquired from the service providing server request information table 404a by using the service providing server ID "sp002" as a key. Here, the value of the cooperative authentication server ID for the service providing server "sp002" is "*", and thus all the authentication servers 3 in the group of candidates for the authentication server 3 to be used are left as the candidates.

Next, out of the group of candidates for the authentication server 3 to be used, the authentication server selecting part 407 selects only authentication servers 3 whose value of the service providing server ID condition includes the service providing server ID of the service providing server 2 as the source of the information acquisition request message, and deletes the others from the group of candidates. Here, the ID "sp002" of the service providing server as the source of the information acquisition request message is included in the service providing server ID condition of each record except for the record of "idp003", and thus the authentication servers of "idp001", "idp002" and "idp004" are left in the candidates. This indicates that the user "user001" does not want to use the authentication server "idp003" in using the service of the service providing server "sp002".

Next, from the authentication server information table 403a stored in the authentication server information storage area 403, the authentication server selecting part 407 acquires authentication server information (supported authentication scheme and retained attribute information) corresponding to the authentication server IDs remaining in the group of candidates for the authentication server 3 to be used, and adds the acquired information to (i.e. associates the acquired information with) each of the group of candidates in the storage area 401.

Next, among the authentication servers 3 in the group of candidates for the authentication server 3 to be used, the authentication server selecting part 407 selects only authentication servers 3 for which the authentication strength conforms with the shortfall of authentication strength judged as described above and the retained attribute information conforms with the requested attribute information from the authentication strength information table 406a stored in the authentication strength information storage area 406.

Here, the shortfall of authentication strength is "1", and "*" is designated as the requested attribute information. Thus, as authentication servers complying with these conditions in the authentication strength information table 406a and the authentication server information table 403a, the authentication servers "idp001" and "idp004" are left in the group of candidates. The authentication server "idp002" is deleted from the group of candidates, since its authentication strength is "2".

Next, among the authentication servers 3 left in the group of candidates, the authentication server selecting part 407 leaves only authentication servers 3 whose value of usage condition conforms with the user's presence information acquired in the step S33, and deletes the others from the group of candidates. Here, the information specifying "home" has been acquired as the presence information, and thus, among the group of candidates, the candidate "idp001" whose usage condition conforms with "home" or "*" (which means that no usage condition is designated) is left in the group of candidates.

Next, the authentication server selecting part 407 leaves the candidates of the highest priority among the group of candidates, and deletes the others from the group of candidates. Here, only the authentication server "idp001" remains as the candidate, and thus narrowing down of the group of candidates is not performed.

Next, the authentication server selecting part 407 selects the candidate whose last authentication time is oldest among the group of candidates. Here, the remaining candidate is only "idp001", and narrowing down of the group of candidates is not performed.

In this stage, with respect to the authentication server 3 selected as the candidate, the value of the last authentication time field 402d of the user policy information table 402a stored in the user policy storage area 402 is replaced by the current time. Here, the last authentication time field of "idp001" is rewritten to the current time.

This ends the processing of the step S15 for selecting an authentication server 3.

Next, the authentication server selecting part 413 acquires the providing URI of the authentication scheme provided by the authentication server 3A selected as the candidate, from the providing URI field 406e of the provided authentication strength information table 406a stored in the provided authentication strength information storage area 406. Then, the authentication server selecting part 413 generates a response message (corresponding to the information acquisition request message) that contains information specifying the acquired providing URI, and transmits the message to the service providing server 2B (S35). Here, the providing URI "https://idp001/passwd/" of the ID/PW authentication scheme provided by the authentication server ID "idp001" is transmitted to the service providing server 2B.

When the service providing server 2B receives from the authentication intermediary server 4 the response message to the information acquisition request message, then the authentication server information acquisition part 207 acquires the providing URI from the received response message, and the authentication request processing part 208 transmits an authentication request message to the providing URI via the terminal device 1 (S37, S38).

In the authentication server 3A, the authentication execution part 307 performs authentication processing between the authentication server 3A and the terminal device 1 used by the user (S38). Here, the authentication execution part 307 requests the user ID and the password from the terminal device 1, and acquires them through the transmitting/receiving part 314 and the network 6.

Then, by using the acquired user ID as a key, the authentication execution part 307 searches the user attribute information table 303a stored in the user attribute information storage area 303, in order to examine the validity of the acquired user ID and the password based on whether a password stored in the corresponding attribute field 303c is equivalent to the acquired password (here, description will be given assuming that the user ID and the password are valid). Then, the authentication result generation part 308 generates an authentication result message indicating that the user has succeeded in the authentication, and transmits the message to the service providing server 2B indirectly via the terminal device 1 (S39, S40).

When the service providing server 2B receives the authentication result message from the authentication server 3A, the authentication request processing part 208 acquires information specifying the authentication result from the received authentication result message, and examines the validity of the authentication result (S41).

When the user's validity is ascertained as a result of verification of the authentication result, then the authentication server information acquisition part 207 generates an information acquisition request message notifying that authentication according to the authentication scheme provided by the above-mentioned providing URI has been successful, and transmits the generated message to the authentication intermediary server 4 through the transmitting/receiving part 213 and the network 6 (S42).

When the authentication intermediary server 4 receives the information acquisition request message through the transmitting/receiving part 420 and the network 6, then the information acquisition request processing part 412 acquires the user ID and the service providing server ID contained in the received information acquisition request message, and proceeds to processing of selecting a candidate for the authentication server to be used 3 (S43).

Here, because the current authentication level of the user identified by the user ID "user001" was updated to "4" in the above step S15, the authentication server selecting part 413 judges that additional authentication is not necessary. Thus, the authentication server selecting part 413 generates a response message that includes the user ID "user001" but not a providing URI, and transmits the generated response message to the service providing server 2B through the transmitting/receiving part 420 and the network 6 (S44).

In the response message transmitted in the step S44, the ID information (i.e. the service-specific user ID for the service providing server 2B) stored in the ID information storage area 408 and the attribute information (corresponding to the requested attribute information requested by the service providing server 2B) stored in the attribute information storage area 409 are included.

When the service providing server 2B receives the response message from the authentication intermediary server 4, then the authentication request processing part 208 acquires the user ID from the response message. The session management part 206 generates a new session ID, and stores a pair of the user ID and the session ID in the session information table 202a stored in the session information storage area 202. And, the service providing part 205 provides the requested service to the terminal device 1 (S45).

In providing the service, the service providing server 2B can use the ID information and the attribute information received in the step S44.

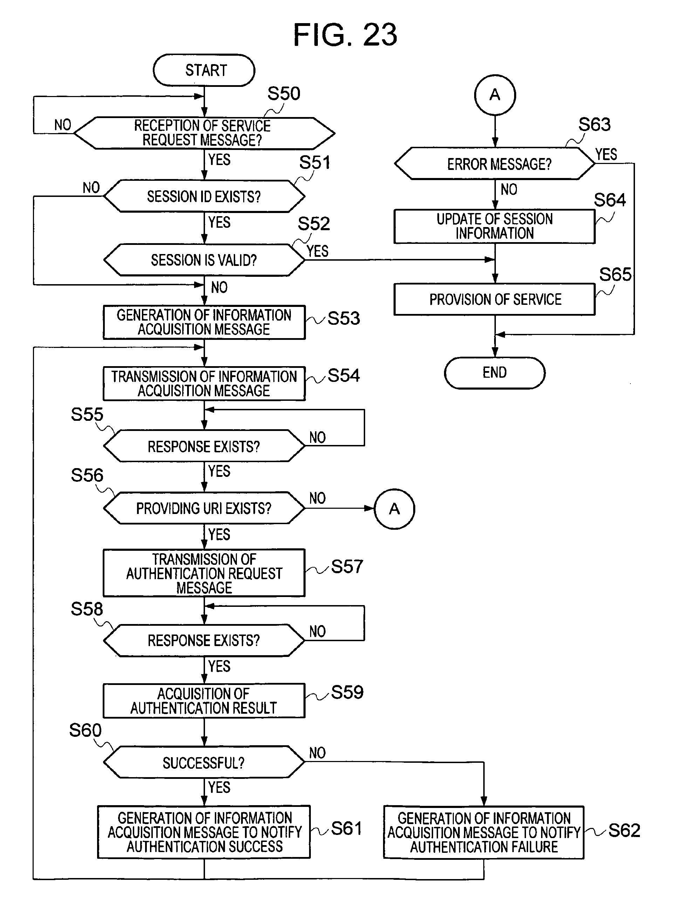

Fig. 23 is a flowchart showing processing in the service providing server 2.

First, when the service communication part 209 of the service providing server 2 receives a service request message from the terminal device 1 through the transmitting/receiving part 213 and the network 6 (Yes in S50), then the session management part 206 examines whether the received service request message includes a session ID (S51). If a session ID is included (Yes in S51), the processing proceeds to the step S52. If a session ID is not included (No in S51), the processing proceeds to the step S53.

In the step S52, the session management part 205 examines whether the session information table 202a stored in the session information storage area 202 has a record corresponding to the session ID ascertained in the step S51. If such a record exists (Yes in S52), the processing proceeds to the step S65. If such a record does not exist (No in S52), the processing proceeds to the step S53.

In the step S65, the session management part 206 judges that the session corresponding to the acquired session ID is valid, and the service providing part 204 provides the service to the terminal device 1 as the source of the service request message.

On the other hand, in the step S53, the session management part 206 judges that the session is invalid, and the authentication server information acquisition part 207 generates an information acquisition message specifying the user ID, which is included in the service request message received in the step S50, as well as the service providing server ID of the its own apparatus.

Then, the authentication server information acquisition part 207 transmits the generated information acquisition message to the authentication intermediary server 4 (S54), and awaits a response (S55).

When a response to the information acquisition message is received from the authentication intermediary server 4 (Yes in S55), then the authentication server information acquisition part 207 examines whether the received response message includes a providing URI or not (S56). If the received response message includes a providing URI (Yes in S56), the processing proceeds to the step S57. If the received response message does not include a providing URI (No in S56), the processing proceeds to the step S63.

In the step S57, the authentication request processing part 208 judges that further authentication is needed, and thus transmits via the terminal device 1 an authentication request message to the authentication server 3 specified by the providing URI ascertained in the step S56 (S57), and awaits a response (S58).

When a response message to the authentication request message is received from the authentication server 3 (Yes in S58), then the authentication request processing part 208 acquires information specifying an authentication result from the received response message (S59) and examines the validity of the authentication result (S60).

When the user's validity is ascertained as a result of verification of the authentication result (Yes in S60), then an information acquisition message which includes the providing URI ascertained in the step S56, information meaning success of authentication, and the user's attribute information included in the authentication result acquired in the step S59, is generated in order to notify the authentication intermediary server 4 that the user's validity has been ascertained (the step S61). Then, the processing returns to the step S54, to repeat the processing.

On the other hand, when the user's validity cannot be ascertained as a result of verification of the authentication result (No in S60), then an information acquisition message which includes the providing URI ascertained in the step S56, and information meaning fail of authentication, is generated in order to notify the authentication intermediary server 4 that the user's validity has not been ascertained (S62). Then, the processing returns to the step S54, to repeat the processing.

Further, if the step S56 judges that a providing URI is not included in the received response message, then the authentication server information acquisition part 207 examines whether the response message received in the step S55 is an error message or not (S63). If the response message received in the step S55 is an error message (Yes in S63), then the processing is ended without providing the service to the terminal device 1. If the response message received in the step S55 is not an error message (No in S63), the processing proceeds to the step S64.

In the step S64, the authentication server information acquisition part 207 judges that further authentication is not necessary. Thus, the authentication request processing part 208 acquires the user's identification information (i.e. service-specific user ID) for the service providing server 2 and the attribute information from the response message to the information acquisition message. And, the session management part 206 generates a new session ID, and stores a pair of the identification information (user ID) in question and the session ID in the session information table 202a stored in the session information storage area 202.

Then, the service providing part 205 provides the service to the terminal device 1 (S65). Here, in providing the service, the service providing part 205 can use the user's identification information (service-specific user ID) and the attribute information acquired in the step S64.

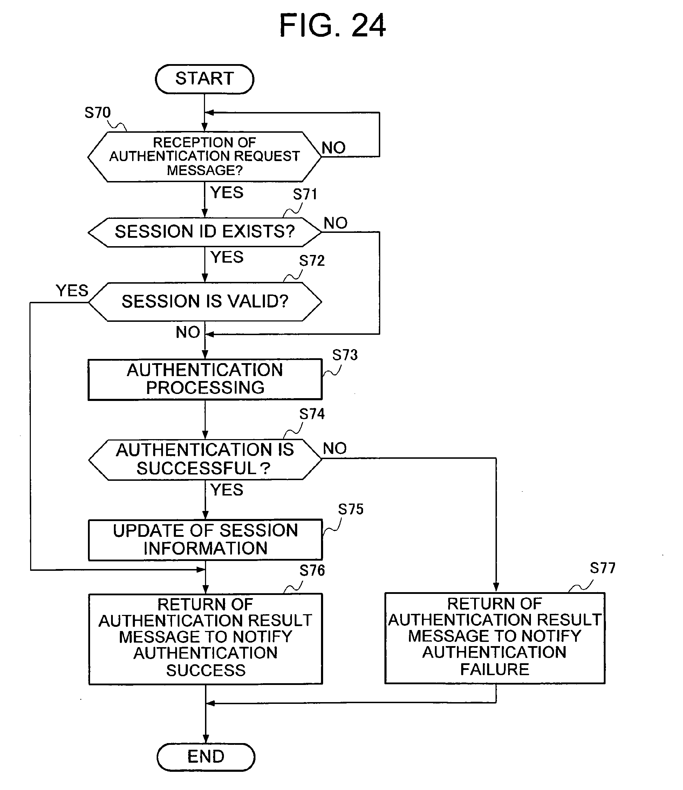

Fig. 24 is a flowchart showing processing in an authentication server 3.

First, when an authentication server 3 receives a user authentication request message through the transmitting/receiving part 314 and the network 6 (Yes in S70), then the session management part 308 examines whether the received user authentication request message includes a session ID or not (S71). If a session ID is included (Yes in the step S71), the processing proceeds to the step S72. If a session ID is not included (No in the step S71), the processing proceeds to the step S73.

In the step S72, the session management part 308 examines whether the session information table 302a stored in the session information storage area 302 has a record corresponding to the session ID ascertained in the step S71, in order to judge whether the session is valid or not.

If the session management part 308 can acquire a destination ID associated with the session ID included in the user authentication request message from the session information table 302a, then the session management part 308 judges that the session is valid (Yes in S72), and the processing proceeds to the step S76. If the session management part 308 cannot acquire a destination ID associated with the session ID included in the user authentication request message from the session information table 302a, then the session management part 308 judges that the session is invalid (No in S72), and the processing proceeds to the step S73.

In the step S73, the authentication execution part 307 performs authentication processing with respect to the terminal device 1. For example, the authentication execution part 307 can examine the user's identity (validity) by requesting a pair of the user ID and the password from the terminal device 1 and by comparing the pair with the user ID and the password stored in the user attribute information table 303a stored in the user attribute information storage area 303.

As another example, the authentication execution part 307 may perform user authentication by transmitting a random number sequence to the terminal device 1 and by using the digital certificate (public key) of the terminal device 1 stored in the user attribute storage area 303 to verify that information returned from the terminal device 1 has been calculated by a secret key held by the terminal device 1.

Next, the authentication execution part 307 examines whether the authentication processing in the step S73 has resulted in successful authentication or not (S74). If the authentication is successful (Yes in the step S74), then the processing proceeds to the step S75. If the authentication has failed (No in the step S74), the processing proceeds to the step S77.

In the step S75, the session management part 309 generates a new session ID, and stores a pair of the user ID acquired as a result of the authentication in the step S73 and the generated session ID in the session information table 302a stored in the session information storage area 302 (S75).

In the step S76, the authentication result generation part 308 generates an authentication result message showing the user's authentication has been successful, and transmits indirectly via the terminal device 1 the generated authentication result message to the service providing server 2 as the source of the user authentication request message. Here, the transmitted authentication result message stores, as a user ID, a destination ID associated with the session ID. Further, the authentication result message includes the attribute information managed by the authentication server 3, of the user identified by the user ID.

On the other hand, in the step S77, the authentication result generation part 308 generates an authentication result message indicating that the user authentication has ended in failure, and transmits indirectly via the terminal device 1 the authentication result message to the service providing server 2 as the source of the user authentication request message.

In the above processing, it may be notified to the terminal device 1 before execution of the authentication (i.e. before S73) or before transmitting the authentication result (i.e. before S76) that transmission of an authentication result will be notified to the service providing server 2.

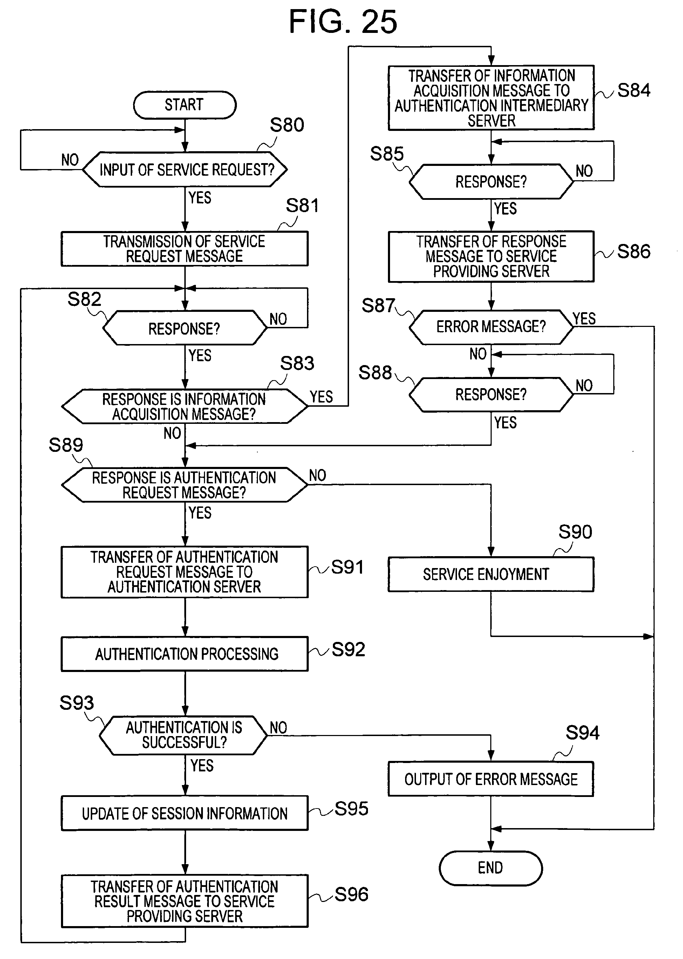

Fig. 25 is a flowchart showing processing in the terminal device 1.

First, when the service using part 106 of the terminal device 1 receives a service use request directed to a service providing server 2 from the user through the input part 115 (Yes in S80), then the service request generation part 107 generates a service request message specifying the user ID, and the service communication part 108 transmits the generated service request message to the service providing server 2 through the transmitting/receiving part 117 and the network 6 (S81) and awaits a response (S82). Here, the service request message may include an ID of an authentication intermediary server 4 that the user wants to use.

When a response message to the service use request is received from the service providing server 2 (Yes in S82), then the service communication part 108 looks into the contents of the response message to examine whether the response message is an information acquisition message that should be transferred to the authentication intermediary server 4 (S83). Here, in the case where the terminal device 1, the service providing server 2, and the authentication intermediary server 4 can communicate with one another by using HTTP or HTTPS as in the case of SAML Web SSO Profile described in Document 2 or OpenID Authentication described in Document 3, then by using the function of HTTP redirect a HTTP request may only be transmitted to a URL indicated by the Location header in the response message without judging whether the response message is an information acquisition message. In this case, it is considered that whether the response message is an information acquisition message or not is equivalent to whether the URL indicated by the Location header is equal to the URL of the authentication intermediary server or not.

If the response message acquired in the step S82 is not an information acquisition message (No in S83), then the processing proceeds to the step S89. On the other hand, if the response message is an information acquisition message (Yes in S83), then the processing proceeds to the step S84.

In the step S84, the service communication part 108 transfers the response message (i.e. the information acquisition message) to the authentication intermediary server 4 (S84), and awaits a response (S85).

Then, when the service communication part 108 receives a response message from the authentication intermediary server 4 (Yes in S85), the service communication part 108 transfers the response message to the service providing server (S86).

If the response message transferred in the step S86 is an error message (Yes in S87), the service communication part 108 ends the processing. If the response message is not an error message (No in S87), the service communication part 108 awaits a response to the message transferred in the step S86 (S88).

Then, when a response is received from the service providing server 2 (Yes in S88), the processing proceeds to the step S89.

In the step S89, the service communication part 108 examines whether the response message is an authentication request message to be transmitted to the authentication server 3. Here, in the case where the terminal device 1, the service providing server 2 and the authentication server 3 can communicate with one another by using HTTP or HTTPS as in the case of SAML Web SSO Profile described in Document 2 or OpenID Authentication described in Document 3, then by using the function of HTTP redirect a HTTP request may only be transmitted to a URL indicated by the Location header in the response message without judging whether the response message is an authentication request message. In this case, it is considered that whether the response message is an authentication request message or not is equivalent to whether the URL indicated by the Location header is equal to the URL of the authentication server or not.

If the response message is not an authentication request message (No in S89), the service from the service providing server 2 is enjoyed (S90). If the information (service-specific user ID and attribute information) required in receiving the service from the service providing server 2 is previously registered in the authentication intermediary server 4, it is possible to arrange that additional acquisition of the information is not requested at the time of receiving the service.

On the other hand, if the response message is an authentication request message (Yes in S89), the response message (i.e. the authentication request message) is transferred to the authentication server 3 (S91).

Then, when execution of authentication processing is requested by the authentication server 3, then the authentication processing part 109 performs the corresponding authentication processing by suitably using the input part 115 and the output part 116 (S92). For example, when a pair of the user ID and the password is requested by the authentication server 3, then the authentication processing part 109 requests the user to input a pair of the user ID and the password, and transmits the acquired pair of the user ID and the password to the authentication server 3 through the transmitting/receiving part 117 and the network 6.

Then, the authentication processing part 109 judges whether the authentication processing in the step S92 is successful or not (S93). If the authentication processing is not successful (No in S93), i.e. if the user's identity cannot be proved to the authentication server 3, then the service using part 106 displays on the output part 116 an error message indicating to the user that the authentication has failed (S94), and ends the processing without enjoying the service.

On the other hand, if the authentication processing is successful (Yes in S93), i.e. if the user's identity can be proved to the authentication server 3, then the session management part 110 associates a session ID which is included in an authentication result message returned as a response from the authentication server 3, with the ID of the authentication server 3, and stores them in the session information table 102a stored in the session information storage area 102 (S95).

Then, the authentication processing part 109 transfers the authentication result message which is returned as the response from the authentication server 3, to the service providing server 2 (S96). And the processing returns to the step S82, to repeat the processing.

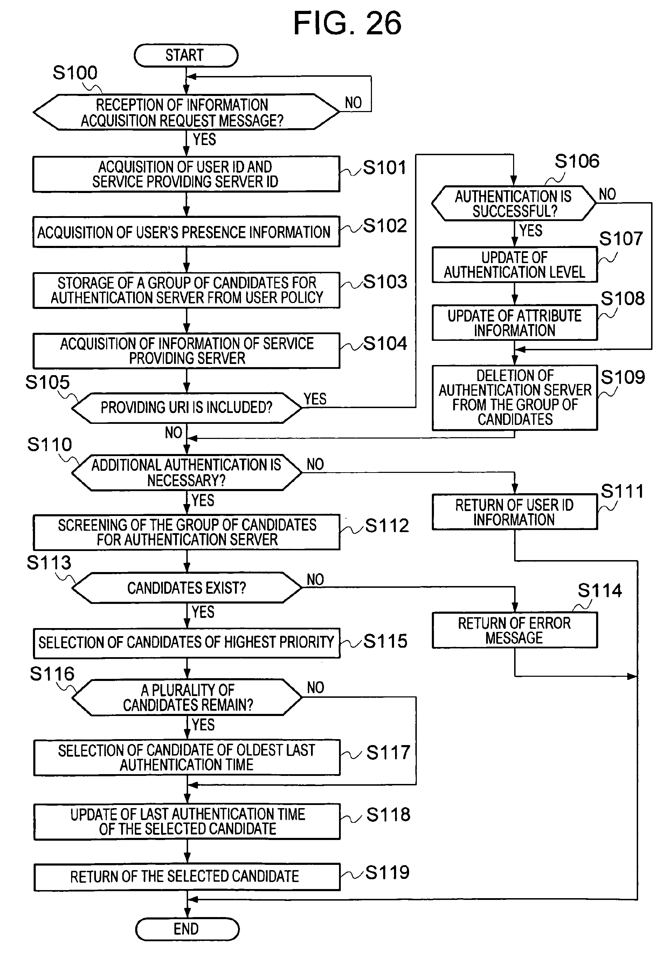

Fig. 26 is a flowchart showing processing in the authentication intermediary server 4.

First, when the authentication intermediary server 4 receives an information acquisition request message through the transmitting/receiving part 420 and the network 6 (Yes in S100), then the information acquisition request processing part 412 acquires a user ID and a service providing server ID contained in the acquired information acquisition request message (S101). Here, it is not necessary that the user ID is included as a parameter in the information acquisition request message. As OpenID in Document 3, the URL of the authentication intermediary server that has received the message in question may be used as a user ID. Or it is possible to request the terminal device 1 to input the user ID.

Next, the user information acquisition part 415 transmits a user information acquisition request specifying the user ID acquired in the step S101 to the presence server 5 through the transmitting/receiving part 211 and the network 6, to acquire the presence information of the user identified by the user ID from the presence server 5 (S102). If a server that manages user's information similar to the presence exists on the network 6, the user information may be acquired from that server.

Next, by using as a key the user ID acquired in the step S101, the authentication server selecting part 413 acquires a set of records of policy information (authentication server ID, last authentication time, priority, usage condition, service providing server ID condition) of the user identified by the user ID from the user policy information table 402a stored in the user policy information storage area 402, and stores in the storage area 401 the set of policy information as a group of candidates for an authentication server 3 to be used (S103).

Next, by using as a key the service providing server ID acquired in the step S101, the authentication server selecting part 413 searches the service providing server request information table 404a stored in the service providing server request information storage area 404, to retrieve the record of the service providing server request information (the cooperative authentication server ID, the requested authentication level, and the requested attributed information) of the service providing server specified by the service providing server ID (S104).

Next, the authentication server selecting part 413 examines whether the information acquisition request message received in the step S100 includes a providing URI (S105). If the information acquisition request message includes a providing URI (Yes in S105), the processing proceeds to the step S106. And if the information acquisition request message does not include a providing URI (No in S105), the processing proceeds to the step S110.

In the step S106, the authentication server selecting part 413 examines whether the information acquisition request message includes information meaning success of authentication. If the information acquisition request message includes information meaning success of authentication (Yes in the step S106), the processing proceeds to the step S107. If the information acquisition request message does not include information meaning success of authentication (No in the step S106), the processing proceeds to the step S109.

In the step S107, the authentication server selecting part 413 updates the authentication level information table 405a in the authentication level information storage area 405. That is to say, the authentication server selecting part 413: searches the authentication level information table 405a by using as a key the user ID acquired in the step S101, to acquire the authentication level of the record specified by the user ID; searches the provided authentication strength information table 406a stored in the provided authentication strength information storage area 406 by using as a key the providing URI ascertained in the step S105, to acquire the authentication strength of the authentication scheme provided at the providing URI; refers to the definition in the authentication level definition information table 407a stored in the authentication level definition information storage area 407 to specify the new authentication level; and updates the authentication level field 405c corresponding to the user ID acquired in the step S101 in the authentication level information table 405a.

Next, the identity conversion part 416 updates the attribute information table 409a stored in the attribute information storage area 409 (S108). That is to say, the identity conversion part 416 searches the attribute information table 409a by using as a key the user ID acquired in the step S101, and stores, as the attribute value of the user specified by the user ID, the attribute value included in the information acquisition request message acquired in the step S100.

In the step S109, the authentication server selecting part 413 deletes the authentication server 3 corresponding to the providing URI ascertained in the step S105 from the group of candidates which is stored in the step S103, for an authentication server 3 to be used.

In the step S110, the authentication server selecting part 413 judges whether additional authentication is necessary or not (S110). First, by using as a key the user ID acquired in the step S101, the authentication server selecting part 413 searches the authentication information table 405a to acquire the current authentication level of the user specified by the user ID. Next, the authentication server selecting part 413 compares the acquired current authentication level and the requested authentication level included in the service providing server request information acquired in the step S104, to examine whether the authentication strength is in short.

If the authentication strength is not in short, it is judged in the step S110 that additional authentication is not necessary (No in the step S110), and the processing proceeds to the step S111. On the other hand, if the authentication strength is in short, it is judged in the step S110 that additional authentication is necessary (Yes in the step S110), and the processing proceeds to the step S 112.

In the step S111, by using as keys the user ID and the service providing server ID acquired in the step S101, the identity conversion part 416 searches the ID information table 408a stored in the ID information storage area 408, to acquire the user's identification information (service-specific user ID) used by the user specified by the user ID in the service providing server 2 specified by the service providing server ID. Then, the identity conversion part 416 searches the service providing server request information table 404a by using as a key the service providing server ID acquired in the S101, to acquire the requested attribute information required by the service providing server 2 specified by the service providing server ID. Subsequently, the identity conversion part 416 searches the attribute information table 409a by using as keys the acquired requested attribute information and the user ID acquired in S101, to acquire the attribute information of the user specified by the user ID. Further, the identity conversion part 416 generates an information acquisition response message that includes the acquired service-specific user information and the attribute information. Then the authentication server selecting part 413 transmits the information acquisition response message directly to the service providing server 2 or indirectly via the terminal device 1, and ends the processing.

On the other hand, in the step S 112, the authentication server selecting part 413 performs processing of narrowing down the group of candidates for an authentication server 3 to be used.

First, among the group of candidates (stored in the step S103) for an authentication server 3 to be used, the authentication server selecting part 413 leaves only authentication servers whose authentication server ID coincides with the cooperative authentication server ID (acquired as the information on the service providing server 2 in the step S104), and deletes others from the group of candidates. If the value of the cooperative authentication server ID is "*", all the authentication servers in the group of candidates are left as the candidates.

Subsequently, among the group of candidates for an authentication server 3 to be used, the authentication server selecting part 413 selects only authentication servers whose value of the service providing server ID condition includes the service providing server ID of the service providing server 2 as the source of the information acquisition request message, and deletes the others from the group of candidates. If the value of the service providing server ID condition is "*", all the authentication servers in the group of candidates are left as the candidates.

Further, for each remaining in the group of candidates for an authentication server to be used, the authentication server selecting part 413 acquires the authentication server information (the supported authentication scheme and the retained attribute information) from the authentication server information table 403a stored in the authentication server information storage area 403, and adds the acquired information to the group of candidates in the storage area 401.

Then, for each remaining in the group of candidates for an authentication server 3 to be used, the authentication server selecting part 413 acquires the authentication strength and the providing URI corresponding to each candidate from the provided authentication strength information table 406a in the storage part 401, and adds the acquired information to the group of candidates in the storage part 401.

Next, among the authentication servers 3 in the group of candidates, the authentication server selecting part 413 leaves only authentication servers 3 for which the supported authentication scheme provides the shortfall of authentication strength (specified in the step S110) and the retained attribute information includes the requested attribute information (acquired as the service providing server request information in the step S104), and deletes others from the group of candidates. Similarly, if the value of the requested attribute information is "*", the value of the retained attribute information does not affect the narrowing down of the group of candidate.

Next, among the authentication servers in the group of candidates, the authentication server selecting part 413 leaves only authentication servers 2 whose value of the usage condition conforms with the presence information acquired in the step S102, and deletes the others from the group of candidates. If the value of the usage condition is "*", all the authentication servers in the group of candidates are left as the candidates.

Then, the authentication server selecting part 413 examines whether a candidate for an authentication server to be used is remaining in the group of candidates (S113). If no candidate remains (No in the step S 113), the processing proceeds to the step S 114. If there is a remaining candidate (Yes in the step S 113), the processing proceeds to the step S 115.

In the step S114, the authentication server selecting part 413 transmits an error message indicating that a usable authentication server 3 does not exist, directly to the service providing server 2 or indirectly via the terminal device 1, and ends the processing.

On the other hand, in the step S 115, the authentication server selecting part 413 selects candidates that have the highest priority among the authentication servers 3 remaining in the group of candidates.

Next, the authentication server selecting part 413 examines whether there are a plurality of authentication servers 3 selected in the step S 115 (S116). If there are a plurality of such authentication servers 3 (Yes in the step S116), the processing proceeds to the step S117. Otherwise (No in the step S 116) the processing proceeds to the step S 118.

In the step S117, the authentication server selecting part 413 selects the candidate whose last authentication time is oldest among the candidates.

Then, with respect to the selected authentication server 3, the user policy management part 414 updates the value of the last authentication time field 402d of the user policy information table 402a stored in the user policy information storage area 402 to the current time (S 118).

Then, the authentication server selecting part 413 transmits the ID of the authentication server 3 selected as the candidate directly to the service providing server or indirectly via the terminal device 1 (S 119), and ends the processing.

As described above, according to the present invention, only when the user inputs the same user ID into the terminal device 1, the best authentication server 3 is selected dynamically based on the user's policy, the supported authentication scheme and requested attributed information of the service providing server 2, and the user's presence information, to be used for authentication.

Further, the final narrowing down of the candidates for an authentication server 3 to be used is performed based on the last time of using an authentication server 3. Thus, the possibility that the same authentication server 3 is used in a row is reduced. As a result, in comparison with the case where the same authentication server 3 is used in a row, it is more difficult for an authentication server 3 to trace a use history of service by a user.

In the above-described embodiments, as described in the step S 15 of Fig. 21, the step S34 of the Fig. 22 and the steps S112-S117 of Fig. 26, an authentication server 3 is selected such that it satisfies the conditions that: the authentication server 3 is one with which the service providing server 2 is in cooperation; the authentication server 3 whose selection is specified by a user when he enjoys processing by a particular service providing server 2; the authentication server 3 provides an authentication scheme required for satisfying an authentication level requested by the service providing server 2; the authentication server 3 retains the user's attribute information requested by the service providing server 2; the authentication server 3 is selected according to the user's presence information; the authentication server 3 is selected to have the highest priority determined by the user; and the authentication server 3 is selected to have the oldest last authentication time. Of course, this example is not intended to be limitation, and for example it is possible to select an authentication server 3 that satisfies at least one or more of these conditions or an authentication server 3 that satisfies any combination of these conditions.

In the above-described embodiments, as shown in Fig. 14, the authentication level information table 405a stores information specifying a user ID and the most recent authentication level (i.e. current authentication level) already undergone by the user specified by the user ID. Of course, this example is not intended to be limitation. For example, it is possible to store information specifying the authentication strength of an authentication scheme, according to which the user specified by the user ID has undergone authentication at the current authentication level, and the number of times the user underwent authentication according to authentication schemes having that authentication strength. By storing such information, it is possible to judge a shortfall of authentication strength even in the case where authentication should be performed particularly three times or more according to an authentication scheme of specific authentication strength.

In the above-described embodiments, the authentication intermediary server 4 and the presence server 5 are described as separate apparatuses. Of course, this example is not intended to be limitation, and the various kinds of processing performed in these apparatuses may be performed in one apparatus.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An authentication intermediary server that selects an authentication server for authenticating a user of a terminal device when the terminal device is going to receive service from a service providing server, wherein:
the authentication intermediary server comprises a control part and a storage part that stores service providing server request information that specifies a service providing server ID and specifies a requested condition requested in authentication by a service providing server corresponding to the service providing server ID; and
the control part performs:
processing, in which, when an information acquisition request specifying a service providing server ID is received from the service providing server, a requested condition corresponding to the service providing server ID specified by the information acquisition request is acquired from the service providing server request information, and the authentication server satisfying the acquired requested condition is selected; and
processing, in which information specifying the selected authentication server is notified to the service providing server.

2. An authentication intermediary server of Claim 1, wherein:
the storage part stores:
authentication level information, which specifies a user ID and a current authentication level that is a most recent authentication level at which a user specified by the user ID underwent authentication;
provided authentication strength information, which specifies an authentication server ID, an authentication scheme provided by an authentication server specified by the authentication server ID, and an authentication strength of the authentication scheme; and
authentication level definition information, which specifies an authentication level and an authentication strength required by the authentication level;
the requested condition includes a requested authentication level that is an authentication level requested by the service providing server;
the information acquisition request includes a user ID;
the control part performs:
processing, in which a current authentication level corresponding to the user ID specified by the information acquisition request is specified from the authentication level information;
processing, in which a requested authentication level corresponding to the service providing server ID specified by the information acquisition request is specified from the requested condition;
processing, in which, when the current authentication level specified from the authentication level information does not satisfy the requested authentication level specified from the requested condition, then the current authentication level specified from the authentication level information and the requested authentication level specified from the requested condition are compared, and an authentication strength, which is necessary to satisfy the requested authentication level specified from the requested condition is specified; and
processing, in which authentication server IDs of authentication servers that provide an authentication scheme satisfying the authentication strength shortfall is specified from the provided authentication strength information; and
the control part selects an authentication server that is to authenticate the user of the terminal device out of the authentication servers specified by the authentication server IDs specified from the provided authentication strength information.

3. An authentication intermediary server of Claim 1, wherein:
the storage part stores authentication server information that specifies an authentication server ID and retained attribute information that is user's attribute information retained by the authentication server specified by the authentication server ID;
the requested condition includes requested attribute information that is user's attribute information used in authentication requested by the service providing server; and
the control part specifies, from the requested condition, requested attribute information corresponding to the service providing server ID specified in the information acquisition request, and selects an authentication server that has, in the retained attribute information, the requested attribute information specified from the requested condition.

4. An intermediary server of Claim 1, wherein:
the requested condition includes cooperative authentication server ID information that specifies an authentication server with which the service providing server is in cooperation; and
the control part specifies, from the requested condition, cooperative authentication server ID information corresponding to the service providing server ID specified in the information acquisition request, and selects an authentication server specified by the cooperative authentication server ID information specified from the requested condition.

5. An authentication intermediary server of Claim 1, wherein:
the storage part stores user policy information that specifies a user ID, an authentication server that can authenticate a user specified by the user ID, a last selection date when the authentication server was last selected, and a selection condition for selecting the authentication server;
the information acquisition request includes a user ID; and
the control part selects, based on the user policy information, an authentication server that satisfies the selection condition and has an oldest last selection date among authentication servers that can authenticate a user specified by the user ID included in the information acquisition request.

6. An authentication intermediary server of Claim 5, wherein:
the condition of selection includes presence information that specifies a situation of the user; and
the control part performs processing of acquiring presence information corresponding to the user ID specified in the information acquisition request, and selects an authentication server for which the selection condition includes the acquired presence information.

7. An authentication server of Claim 5, wherein:
the selection condition includes a service providing server ID;
a service providing server ID, provision of whose service is requested by the terminal device, is specified in the information acquisition request; and
the control part selects an authentication server for which the selection condition includes the service providing server ID specified in the information acquisition request.

8. An authentication intermediary server of Claim 5, wherein:
the user policy information includes information specifying a priority for selecting an authentication server; and
the control part selects an authentication server out of authentication servers having a highest priority.

9. A computer program with computer-executable instructions which, when run on a computer, cause the computer to function as the authentication intermediary server of any of claims 1 to 8.

10. An authentication system comprising: a terminal device; a service providing server that provides a service to the terminal device; an authentication server that authenticates a user of the terminal device when the terminal device receives provision of the service from the service providing server; and an authentication intermediary server that selects the authentication server; wherein:
the authentication intermediary server comprises a control part and a storage part that stores service providing server request information that specifies a service providing server ID and a requested condition requested in authentication by a service providing server corresponding to the service providing server ID; and
the control part of the authentication intermediary server performs:
processing, in which, when an information acquisition request specifying a service providing server ID is received from the service providing server, a requested condition corresponding to the service providing server ID specified by the information acquisition request is acquired from the service providing server request information, and the authentication server satisfying the acquired requested condition is selected; and
processing, in which information specifying the selected authentication server is notified to the service providing server.

11. A selection method of selecting an authentication server for authenticating a user of a terminal device when the terminal device is going to receive service from a service providing server, with the selection being made by an authentication intermediary server comprising a control part and a storage part that stores service providing server request information that specifies a service providing server ID and specifies a requested condition requested in authentication by the service providing server ID, the method comprising:
a step of processing performed by the control part, in which, when an information acquisition request specifying a service providing server ID is received from the service providing server, a requested condition corresponding to the service providing server ID specified by the information acquisition request is acquired from the service providing server request information, and the authentication server satisfying the acquired requested condition is selected; and
a step of processing performed by the control part, in which information specifying the selected authentication server is notified to the service providing server.
